(19) Europäisches Patentamt
European Patent Office
Office européen des brevets

(11) EP 4 509 553 A1

(12) # EUROPEAN PATENT APPLICATION
published in accordance with Art. 153(4) EPC

(43) Date of publication:
**19.02.2025 Bulletin 2025/08**

(21) Application number: **22963096.7**

(22) Date of filing: **27.10.2022**

(51) International Patent Classification (IPC):
***C08G 81/02*** $^{(2006.01)}$ ***H01M 4/62*** $^{(2006.01)}$

(52) Cooperative Patent Classification (CPC):
**C08G 81/02; H01M 4/62**

(86) International application number:
**PCT/CN2022/128035**

(87) International publication number:
**WO 2024/087112 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **ZENG, Zipeng**
  **Ningde, Fujian 352100 (CN)**
- **LI, Cheng**
  **Ningde, Fujian 352100 (CN)**
- **LIU, Huihui**
  **Ningde, Fujian 352100 (CN)**
- **WANG, Jingming**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **BAB-TYPE BLOCK COPOLYMER AND PREPARATION METHOD THEREFOR, POSITIVE ELECTRODE SHEET, SECONDARY BATTERY, BATTERY MODULE, BATTERY PACK AND ELECTRIC DEVICE**

(57) · Provided in the present application are a BAB-type block copolymer and a preparation method therefor, a positive electrode sheet, a secondary battery, a battery module, a battery pack and an electric device. The BAB-type block copolymer comprises a B-block and an A-block, wherein the B-block contains a structural unit as shown in formula I, and the A-block contains one or more of a structural unit as shown in formula II and a structural unit as shown in formula III, where R1, R2 and R3 are each independently selected from one or more of hydrogen, fluorine and a C1-3 alkyl group containing at least one fluorine atom, R4, R5 and R6 are each independently selected from hydrogen and a substituted or unsubstituted C1-5 alkyl group, and R7 is selected from a carboxyl group, an ester group, a hydroxyl group, an amide group, a cyano group and a substituted or unsubstituted aryl group.

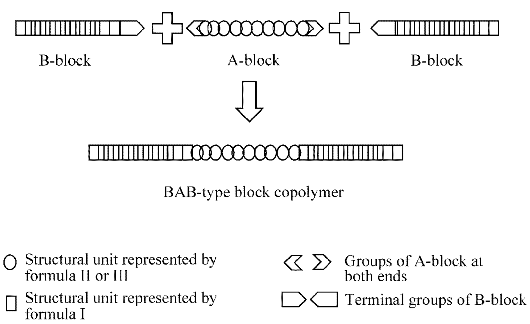


FIG. 1

EP 4 509 553 A1

## Description

### Technical Field

The present application relates to the technical field of secondary batteries, and in particular to a BAB-type block copolymer and a preparation method therefor, a positive electrode plate, a secondary battery, a battery module, a battery pack and a power consuming device.

### Background Art

In recent years, secondary batteries have been widely used in energy storage power systems such as hydraulic power, thermal power, wind power and solar power plants, as well as many fields such as electric tools, electric bicycles, electric motorcycles, electric vehicles, military equipment, and aerospace. With the popularity of secondary batteries, there are higher requirements on their energy density, cycling performance, etc.

A binder is a common material in secondary ion batteries, and is widely used in the electrode plates, separators, packaging sites, etc., of the batteries. However, a traditional binder has high production cost, insufficient production capacity and great harm to the environment, and gel is easy to appear during the preparation process, resulting in poor stability and high processing cost of a slurry, and an electrode prepared therefrom has poor conductivity, high resistance, low yield as well as unstable battery performance, which is difficult to meet the market requirements for battery cost and performance. Therefore, the existing binders still need to be improved.

### Summary of the Invention

The present application has been made in view of the above problems, and an objective of the present application is to provide a BAB-type block copolymer. By using the block copolymer as a binder, the binding force of an electrode plate can be effectively improved, and the direct current impedance growth rate and the metal deposition amount of a battery can be reduced, such that the electrode plate has both a low film layer resistance and excellent flexibility, and the battery has both a high cycle capacity retention rate and a high capacity retention rate at 45°C.

A first aspect of the present application provides a BAB-type block copolymer, wherein the B-block contains a structural unit represented by formula I, and the A-block comprises one or more of a structural unit represented by formula II and a structural unit represented by formula III,

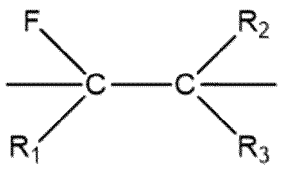

Formula I

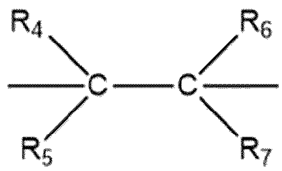

Formula II

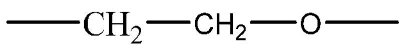

Formula III

wherein $R_1$, $R_2$ and $R_3$ are each independently selected from one or more of hydrogen, fluorine, and $C_{1-3}$ alkyl containing at least one fluorine atom, $R_4$, $R_5$ and $R_6$ are each independently selected from hydrogen and substituted or unsubstituted $C_{1-5}$ alkyl, and $R_7$ is selected from carboxyl, an ester group, hydroxyl, amido, cyano, and a substituted or unsubstituted aromatic group.

A binder prepared from the BAB-type block copolymer can effectively reduce the ordered arrangement of fluorine-containing block polymers since a fluorine-free block polymer is located between the fluorine-containing block polymers; moreover, the introduction of functional groups of the fluorine-free polymer can improve the adhesive properties of the BAB-type block copolymer, giving full play to the respective advantages of a fluorine-containing binder and a

fluorine-free binder and making their respective advantages complementary to each other. Compared with a traditional PVDF binder, the binder can effectively improve the binding force of the electrode plate, reduce the direct current impedance growth rate and metal deposition amount of the battery, and also ensure that the electrode plate has both a low film layer resistance and excellent flexibility and the battery has both a high cycle capacity retention rate and a high capacity retention rate at 45°C.

In any embodiment, the A-block contains a structural unit represented by formula II with $R_7$ being amido.

The A-block containing a structural unit represented by formula II with $R_7$ being amido is beneficial for significantly reducing the dissolution of a transition metal on a positive electrode while improving the binding force and flexibility of the electrode plate and reducing the film layer resistance of the electrode plate.

In any embodiment, the A-block contains a structural unit represented by formula II with $R_7$ being cyano and a structural unit represented by formula II with $R_7$ being an ester group.

The A-block containing both a structural unit represented by formula II with $R_7$ being cyano and a structural unit represented by formula II with $R_7$ being an ester group is beneficial for improving the binding force and flexibility of the electrode plate, reducing the film layer resistance of the electrode plate, reducing the direct current impedance growth rate and metal deposition amount of the battery, and also ensuring that the battery has both a high cycle capacity retention rate and a high capacity retention rate at 45°C.

In any embodiment, the A-block contains a structural unit represented by formula II with $R_7$ being cyano, a structural unit represented by formula II with $R_7$ being an ester group, and a structural unit represented by formula II with $R_7$ being a substituted or unsubstituted aromatic group.

The applicant unexpectedly found that when the A-block contains a structural unit represented by formula II with $R_7$ being cyano, a structural unit represented by formula II with $R_7$ being an ester group, and a structural unit represented by formula II with $R_7$ being a substituted or unsubstituted aromatic group at the same time, which is beneficial to further improving the binding force and flexibility of the electrode plate, as well as the cycle capacity retention rate and the capacity retention rate at 45°C of the battery.

In any embodiment, the A-block contains a structural unit represented by formula II with $R_7$ being cyano, a structural unit represented by formula II with $R_7$ being amido, and a structural unit represented by formula II with $R_7$ being an ester group.

When the A-block contains a structural unit represented by formula II with $R_7$ being cyano, a structural unit represented by formula II with $R_7$ being amido, and a structural unit represented by formula II with $R_7$ being an ester group at the same time, the metal deposition amount of the battery can be greatly reduced while the electrode plate is ensured to have a low film layer resistance, an excellent binding force and excellent flexibility.

In any embodiment, the mass content of the A-block is 40% - 60%, based on the total mass of all the structural units in the block copolymer.

By controlling the mass content of the structural unit represented by formula I in the BAB-type block copolymer within a suitable range, the binder can effectively improve the binding force and flexibility of the electrode plate, reduce the film layer resistance of the electrode plate, improve the cycle capacity retention rate and the capacity retention rate at 45°C of the battery, and reduce the direct current impedance growth rate and metal deposition amount of the battery.

In any embodiment, the block copolymer has a weight-average molecular weight of 400,000 - 2,000,000.

By controlling the weight-average molecular weight of the block copolymer within a suitable range, the binder can improve the binding force of the electrode plate, reduce the direct current impedance growth rate and metal deposition amount of the battery, and also ensure that the electrode plate has both a low film layer resistance and excellent flexibility and the battery has both a high cycle capacity retention rate and a high capacity retention rate at 45°C.

In any embodiment, the A-block in the block copolymer has a weight-average molecular weight of 200,000 - 1,100,000.

By controlling the weight-average molecular weight of the A-block in the block copolymer within a suitable range, the binder can improve the binding force of the electrode plate, reduce the direct current impedance growth rate and metal deposition amount of the battery, and also ensure that the electrode plate has both a low film layer resistance and excellent flexibility and the battery has both a high cycle capacity retention rate and a high capacity retention rate at 45°C.

In any embodiment, in the block copolymer, each of the B-blocks has a weight-average molecular weight of 100,000 - 500,000.

By controlling the weight-average molecular weight of each B-block in the block copolymer within a suitable range, the binder can improve the binding force of the electrode plate, reduce the direct current impedance growth rate and metal deposition amount of the battery, and also ensure that the electrode plate has both a low film layer resistance and excellent flexibility and the battery has both a high cycle capacity retention rate and a high capacity retention rate at 45°C.

In any embodiment, the structural unit represented by formula I is derived from the group consisting of vinylidene fluoride, tetrafluoroethylene, vinyl fluoride, hexafluoropropene, and combinations thereof.

In any embodiment, the structural unit represented by formula II is derived from the group consisting of acrylonitrile, butenenitrile, styrene, vinyl alcohol, acrylamide, ethyl acrylate, ethyl methacrylate, butyl methacrylate,

methacrylic acid, ethylacrylic acid, methacrylamide, N-methacrylamide, N-methylmethacrylamide, N-isopropylacrylamide, N-isopropylmethacrylamide, N-tert-butylacrylamide, N-tert-butyl(meth)acrylamide, N,N-dimethylacrylamide, N,N-dimethylmethacrylamide, N,N-diethylacrylamide, N,N-diethylmethacrylamide, acrylic acid, vinylbenzoic acid, allyl acetate, an acrylate, and combinations thereof.

The above raw materials are simple and easily available, and compared with conventional binders, the production cost can be greatly reduced.

A second aspect of the present application further provides a method for preparing a BAB-type block copolymer, comprising the following steps:

preparation of B-block: polymerizing at least one monomer represented by formula V to prepare the B-block,

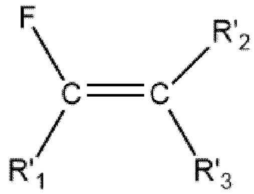

Formula V

wherein $R'_1$, $R'_2$ and $R'_3$ are each independently selected from one or more of hydrogen, fluorine, and $C_{1-3}$ alkyl containing at least one fluorine atom;

preparation of A-block: polymerizing at least one monomer represented by formula VI to prepare the A-block, or subjecting a monomer represented by formula VII to ring-opening polymerization to prepare the A-block,

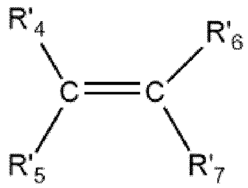

Formula VI

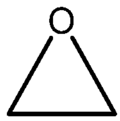

Formula VII

wherein $R'_4$, $R'_5$ and $R'_6$ are each independently selected from hydrogen and substituted or unsubstituted $C_{1-5}$ alkyl, and $R'_7$ is selected from one of carboxyl, an ester group, hydroxyl, amido, cyano, and a substituted or unsubstituted aromatic group; and

preparation of BAB-type block copolymer: connecting the B-blocks with the A-block to prepare the BAB-type block copolymer.

Compared with a traditional copolymerization method, the preparation method can maximize the weight-average molecular weights of the fluorine-containing blocks and the fluorine-free block, and give full play to the respective advantages of a fluorine-containing binder and a fluorine-free binder to make their respective advantages complementary to each other. The BAB-type triblock copolymer binder prepared by using the method can effectively improve the binding force of the electrode plate, reduce the direct current impedance growth rate and metal deposition amount of the battery, and also ensure that the electrode plate has both a low film layer resistance and excellent flexibility and the battery has both a high cycle capacity retention rate and a high capacity retention rate at 45°C.

In any embodiment, a method for preparing the B-block comprises:

reacting at least one monomer represented by formula V, a chain transfer agent and a first initiator at a reaction temperature of 60-75 °C for 4-6 hours by means of reversible addition-fragmentation chain transfer polymerization to obtain the B-block with an azido or alkynyl group at the tail end.

By using the preparation method, controllable polymerization can be realized, and the molecular weight distribution of the product is narrow.

In any embodiment, a method for preparing the A-block comprises:

subjecting the monomer represented by formula VI and a second initiator to a polymerization reaction at a reaction temperature of 80-95°C for 2.5-5 hours to obtain the A-block with alkynyl or azido groups at both ends.

By using the preparation method, the A-block with azidation or terminal alkynylation at both ends is successfully prepared.

In any embodiment, a method for preparing the A-block comprises:

subjecting the monomer represented by formula VII, an ionic initiator and water to a polymerization reaction at a reaction temperature of 60-80°C for 6-8 hours to obtain a product with hydroxyl at both ends; and
subjecting the hydroxyl of the product to a functionalization reaction to obtain the A-block with alkynyl or azido groups at both ends.

By using the preparation method, the A-block with azidation or terminal alkynylation at both ends is successfully prepared.

In any embodiment, the preparation of the BAB-type block copolymer comprises:
mixing the A-block with azido or alkynyl groups at both ends and the B-blocks with an alkynyl or azido group at the tail end, and subjecting same to a click reaction to prepare the BAB-type block copolymer, wherein the end groups of the A-block and the B-blocks are different.

The preparation method has the advantages of high efficiency, stability and high specificity, and improves the yield of the product.

In any embodiment, the chain transfer agent is an RAFT chain transfer agent containing a terminal alkynyl or azido.

In any embodiment, the second initiator is a symmetrical bifunctional initiator.

In any embodiment, the first initiator is selected from one or two of azobisisobutyronitrile and azobisisoheptonitrile.

A third aspect of the present application provides the use of a BAB-type block copolymer according to any embodiment in a secondary battery.

A fourth aspect of the present application provides a positive electrode plate, comprising a positive electrode current collector and a positive electrode film layer provided on at least one surface of the positive electrode current collector, wherein the positive electrode film layer comprises a positive electrode active material, a conductive agent and a binder, and the binder is a BAB-type block copolymer according to any embodiment or a BAB-type block copolymer prepared by a preparation method according to any embodiment.

The positive electrode plate has a low film layer resistance, an excellent binding force and good flexibility, and the battery has a low metal deposition amount, and excellent cycling performance and high-temperature storage performance.

In any embodiment, the binding force per unit length between the positive electrode film layer and the positive electrode current collector is not less than 11 N/m. In virtue of a high binding strength between the positive electrode film layer and the positive electrode current collector of the electrode plate, the positive electrode film layer is not prone to falling off from the positive electrode current collector during use, which is helpful to improve the cycling performance and safety of the battery.

In any embodiment, the phenomenon of light transmission through the positive electrode plate will not occur until the positive electrode plate is subjected to bending tests not less than 3 times. The electrode plate can be subjected to bending tests not less than 3 times, indicating that the electrode plate has good flexibility, and is not prone to cracking during the production process or brittle failure during use, which is helpful to improve the yield of the battery and the safety performance of the battery.

In any embodiment, the film layer resistance of the positive electrode plate is less than or equal to 1.0 Ω. The electrode plate has a relatively low film layer resistance, indicating that materials in the positive electrode film layer are uniformly dispersed, and the positive electrode film layer has good electron transport efficiency, which is conductive to fulfilling the performance of the battery.

A fifth aspect of the present application provides a secondary battery, comprising an electrode assembly and an electrolyte solution, wherein the electrode assembly comprises a separator, a negative electrode plate and a positive electrode plate provided in the fourth aspect of the present application.

A sixth aspect of the present application provides a battery module, comprising a secondary battery in the fifth aspect of the present application.

A seventh aspect of the present application provides a battery pack, comprising a battery module in the sixth aspect of the present application.

An eighth aspect of the present application provides a power consuming device, comprising at least one of a secondary battery in the fifth aspect of the present application, a battery module in the sixth aspect of the present application, or a battery pack in the seventh aspect of the present application.

## Brief Description of the Drawings

Fig. 1 shows a schematic diagram of the preparation of a BAB-type block copolymer according to an embodiment of the present application;
Fig. 2 shows a schematic diagram of a secondary battery according to an embodiment of the present application;
Fig. 3 shows an exploded view of the secondary battery according to an embodiment of the present application as shown in Fig. 2;
Fig. 4 shows a schematic diagram of a battery module according to an embodiment of the present application;
Fig. 5 shows a schematic diagram of a battery pack according to an embodiment of the present application;
Fig. 6 shows an exploded view of the battery pack of the embodiment of the present application as shown in Fig. 5; and
Fig. 7 shows a schematic diagram of a power consuming device using a secondary battery according to an embodiment of the present application as a power source.

Description of reference signs:
1 - battery pack; 2 - upper box body; 3 - lower box body; 4 - battery module; 5 - secondary battery; 51 - housing; 52 - electrode assembly; 53 - cover plate.

## Detailed Description of Embodiments

Hereinafter, embodiments of the positive electrode active material and the preparation method therefor, the positive electrode plate, the secondary battery, the battery module, the battery pack, and the electrical device of the present application are described in detail and specifically disclosed with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer $\geq 2$, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are openended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

Polyvinylidene fluoride (PVDF) is often used as a binder for an electrode plate in the prior art. However, PVDF has

many problems during use, for example, it is sensitive to water content in the production process; it will generate a large amount of HF to pollute the environment during the battery recycling process and can not be recycled on a large scale due to the environmental protection policy restrictions; and when it is mixed with a high-capacity positive electrode active material (such as a high-nickel ternary material) to prepare a positive electrode slurry, the strong polar groups on PVDF will activate the residual hydroxyl groups on the positive electrode active material and then bonded to the metal elements (such as nickel element) in the positive electrode active material to form chemical crosslinks, which eventually results in slurry gelling, and affecting the normal preparation of the slurry and subsequent electrode plate processing. In addition, PVDF is easy to crystallize, which is not conducive to the transport of electrons in an electrode plate, such that the electrode plate has a high resistance and a poor electron transport performance, making it difficult to fulfill the performance of a high-capacity positive electrode active material.

[Binder]

On this basis, the present application proposes a BAB-type block copolymer, wherein the B-block contains a structural unit represented by formula I, and the A-block contains one or more of a structural unit represented by formula II and a structural unit represented by formula III,

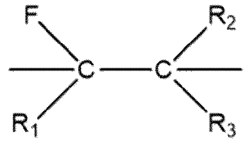

Formula I

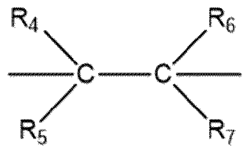

Formula II

$-CH_2-CH_2-O-$ Formula III

wherein $R_1$, $R_2$ and $R_3$ are each independently selected from one or more of hydrogen, fluorine, and $C_{1-3}$ alkyl containing at least one fluorine atom, $R_4$, $R_5$ and $R_6$ are each independently selected from hydrogen and substituted or unsubstituted $C_{1-5}$ alkyl, and $R_7$ is selected from carboxyl, an ester group, hydroxyl, amido, cyano, and a substituted or unsubstituted aromatic group.

Herein, the term "block copolymer" is a special polymer prepared by connecting two or more polymer segments of different properties together. A block polymer having a specific structure will exhibit properties different from those of a simple linear polymer and a mixture of many random copolymers and even homopolymers. The common types include AB and BAB, where A and B are both long chain segments; and there are also (AB)n-type multi-segment copolymers, where the A and B segments are relatively short.

Herein, the term "BAB-type block copolymer" refers to a triblock copolymer with an A-block in the middle and B-blocks on both sides. The A-block and B-block are respectively polymer chain segments with a predetermined weight-average molecular weight formed by the polymerization of different monomers. In some embodiments, the B-block is a long sequence segment formed by the polymerization of a fluoromonomer, and the A-block is a long sequence segment formed by the polymerization of one or more fluorine-free monomers. The A-block and B-block are covalently bonded in an orderly manner to form a BAB-type block copolymer. Taking the BAB-type block polymer prepared in example 1 as an example, the A-block of poly(acrylonitrile-butyl methacrylate-styrene) is formed by the polymerization of an acrylonitrile monomer, a butyl methacrylate monomer and a styrene monomer and has a weight-average molecular weight of 480,000; the B-block is polyvinylidene fluoride, which is formed by the polymerization of a vinylidene fluoride monomer and has a weight-average molecular weight of 400,000; and the end groups at both ends of the B-block and the A-block are bonded to obtain a polyvinylidene fluoride-poly(acrylonitrile-butyl methacrylate-styrene)-polyvinylidene fluoride block copolymer (a BAB-type block copolymer) having a weight-average molecular weight of 1,200,000.

Herein, the term "polymer" involves, on the one hand, an aggregate of macromolecules that are chemically homogeneous but are different in the degree of polymerization, mass content and chain length, which is prepared by polymerization reaction. On the other hand, the term also involves the derivatives of such macromolecule aggregates formed by a polymerization reaction, namely, the compounds that can be obtained by the reaction (e.g., addition or

substitution) of the functional groups in the above macromolecules and may be chemically homogeneous or chemically heterogeneous.

Herein, the term "$C_{1-3}$ alkyl" refers to a linear or branched hydrocarbon chain group only consisting of carbon and hydrogen atoms, in which there is no unsaturation, having from one to three carbon atoms, and attached to the rest of the molecule via a single bond. Examples of $C_{1-3}$ alkyl include, but are not limited to: methyl, ethyl, n-propyl, and 1-methylethyl (isopropyl).

Herein, the term "$C_{1-5}$ alkyl" refers to a straight or branched hydrocarbon chain radical that is composed of carbon and hydrogen atoms only without unsaturation, has one to five carbon atoms, and is attached to the rest of the molecule via a single bond. Examples of $C_{1-5}$ alkyl include, but are not limited to: methyl, ethyl, n-propyl, 1-methylethyl (isopropyl), n-butyl, and n-pentyl.

Herein, the term "carboxyl" refers to a -COOH group.

Herein, the term "ester group" refers to a $-COOR_{10}$ group, where $R_{10}$ is selected from substituted or unsubstituted $C_{1-5}$ alkyl.

Herein, the term "hydroxyl" refers to a -OH group.

Herein, the term "amido" refers to a $-CO-NR_8R_9$ group, where $R_8$ and $R_9$ are each independently selected from substituted or unsubstituted $C_{1-5}$ alkyl.

Herein, the term "cyano" refers to a -CN group.

Herein, the term "substituted" refers to that at least one hydrogen atom of the compound or chemical moiety is substituted by another chemical moiety with a substituent, in which each substituent is independently selected from: hydroxyl, mercapto, amino, cyano, nitro, aldehyde, halogen atoms, alkenyl, alkynyl, aryl, heteroaryl, $C_{1-6}$ alkyl, and $C_{1-6}$ alkoxy.

In some embodiments, the BAB-type block copolymer is used as an electrode binder.

Herein, the term "binder" refers to a chemical compound, polymer or mixture that forms a colloidal solution or a colloidal dispersion in a dispersion medium.

In some embodiments, the dispersion medium of the binder is an aqueous solvent, such as water. That is, the binder is dissolved in the aqueous solvent.

In some embodiments, the dispersion medium of the binder is an oily solvent, and examples of the oily solvent include, but are not limited to, dimethylacetamide, N,N-dimethylformamide, N-methyl pyrrolidone, acetone, dimethyl carbonate, ethyl cellulose, and polycarbonate. That is, the binder is dissolved in the oily solvent.

In some embodiments, the binder is used to hold an electrode material and/or a conductive agent to appropriate positions and binding them on a conductive metal component to form an electrode.

In some embodiments, the binder is used as a positive electrode binder for binding a positive electrode active material and/or a conductive agent to form an electrode.

In some embodiments, the binder is used as a negative electrode binder for binding a negative electrode active material and/or a conductive agent to form an electrode.

The fluorine element contained in the B-block forms hydrogen bonds with the hydroxyl or/and carboxyl groups on the surface of the active material and current collector, enabling the electrode plate to have an excellent binding force. The amido group, carboxyl group, ester group, hydroxyl group, or cyano group contained in the A-block can form hydrogen bonds with the hydroxyl groups on the surface of the positive electrode active material and conductive agent particles to improve the binding force of the electrode plate, and moreover can effectively combined with the transition metal in the positive electrode active material, thereby inhibiting the dissolution of the transition metal during use and improving the cycling performance. Meanwhile, the insertion of an A-block between B-blocks can reduce the orderly large-area arrangement of fluorine-containing segments, reduce crystallinity, and play a role in enhancing flexibility. A binder prepared from the BAB-type block copolymer can effectively reduce the ordered arrangement of fluorine-containing block polymers since a fluorine-free block polymer is located between the fluorine-containing block polymers; moreover, the introduction of functional groups of the fluorine-free polymer can improve the adhesive properties of the BAB-type block copolymer, giving full play to the respective advantages of a fluorine-containing binder and a fluorine-free binder and making their respective advantages complementary to each other. Moreover, compared to a simple blend of a fluoropolymer and a fluorine-free polymer, the BAB-type block copolymer can effectively suppress the layering phenomenon of polymers during the preparation of a slurry through the interaction between blocks.

In summary, the BAB-type block copolymer as a binder can increase the binding force of the electrode plate, reduce the direct current impedance growth rate and transition metal dissolution amount of the battery, and also ensure that the electrode plate has both a low film layer resistance and an excellent flexibility and the battery has both a high cycle capacity retention rate and a high capacity retention rate at 45°C.

Herein, the binding force is mainly used to characterize the binding strength between the film layer prepared by a positive electrode slurry and the current collector in a positive electrode plate, which can be tested by any well-known method.

Herein, the film layer resistance is mainly used to characterize the resistance of a positive electrode plate, which

can reflect the electronic conductivity of the positive electrode plate and can be tested by any well-known method.

Herein, the flexibility is mainly used to characterize the bending resistance of a positive electrode plate, which can reflect the ductility of the positive electrode plate and can be tested by any well-known method.

Herein, the direct current impedance growth rate is mainly used to characterize the impedance performance of a battery, which can reflect the increase rate of impedance of the battery during the cycling process and can be tested by any well-known method.

Herein, the cycling performance is mainly used to characterize the cycle use capability of a battery, which can reflect the cycling performance of the battery and can be tested by any well-known method.

Herein, the high-temperature storage performance is mainly used to characterize the usability of a battery at a high temperature, which can reflect the high-temperature stability of the battery and can be tested by any well-known method.

In some embodiments, the A-block contains a structural unit represented by formula II with $R_7$ being amido. In some embodiments, $R_7$ in formula II is as shown in formula IV

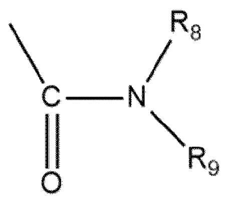

Formula IV

wherein $R_8$ and $R_9$ are each independently selected from hydrogen, and substituted or unsubstituted $C_{1-5}$ alkyl.

The amido group contained in the A-block is likely to form hydrogen bonds with the hydroxyl groups of a positive electrode active material and current collector, which can improve the binding force of an electrode plate. In addition, the amido group contained in the A-block can improve the wetting ability of an electrode plate in the electrolyte solution, facilitate the rapid formation of ion transport channels on the electrode plate, reduce the film layer resistance of the electrode plate, and improve the cycling performance of the battery.

The A-block containing a structural unit represented by formula II with $R_7$ being amido is beneficial for significantly reducing the dissolution of a transition metal on a positive electrode while improving the binding force and flexibility of the electrode plate and reducing the film layer resistance of the electrode plate.

In some embodiments, the A-block contains a structural unit represented by formula II with $R_7$ being cyano and a structural unit represented by formula II with $R_7$ being an ester group.

The block-A contains a strong polar cyano group, which can form strong hydrogen bonds and dipole-dipole interactions with the hydroxyl groups on the surface of a positive electrode active material, that is, it can play the role of maintaining stability and dispersion in the slurry, which is helpful to further improve the binding force of an electrode plate and promoting the dispersion of the positive electrode active material, and reducing the film layer resistance of the electrode plate. Moreover, the strong polar cyano group can enhance the stability of the molecular structure, increase the glass transition temperature of the block copolymer, and improve the rigidity and thermal stability of the block copolymer, which is beneficial to improving the oxidation stability of an electrode plate and can improve the cycling performance and rate performance of a battery. In addition, the cyano group enables the A-block to have a certain coating effect on a positive electrode active material, since the cyano group in the A-block can complex with transition metal ions on the surface of the positive electrode active material, which hinders the dissolution of transition metal ions, thereby reducing the deposition of transition metal ions on the surface of the negative electrode. The ester group contained in the A-block contributes to weakening the too strong dipole moment between the cyano groups, reducing the brittleness of an electrode plate caused by the obstructed free movement of the binder segments due to the too strong acting force between dicyano groups in the A-block, and improving the safety performance of a battery. In addition, the ester group has a good affinity with an electrolyte solution, which contributes to enhancing the contact between the electrolyte solution and the positive electrode active material, thereby improving the ionic conductivity and reducing the film layer resistance of an electrode plate.

The A-block containing both a structural unit represented by formula II with $R_7$ being cyano and a structural unit represented by formula II with $R_7$ being an ester group is beneficial for improving the binding force and flexibility of the electrode plate, reducing the film layer resistance of the electrode plate, reducing the direct current impedance growth rate and metal deposition amount of the battery, and also ensuring that the battery has both a high cycle capacity retention rate and a high capacity retention rate at 45°C.

In some embodiments, the A-block contains a structural unit represented by formula II with $R_7$ being cyano, a structural unit represented by formula II with $R_7$ being an ester group, and a structural unit represented by formula II with $R_7$ being a substituted or unsubstituted aromatic group.

The aromatic group contained in the A-block contributes to improving the mechanical strength of an electrode

plate to adapt to the volume changes of the positive electrode active material during the charging and discharging process, maintaining the structural integrity of the electrode during the charging and discharging process, and improving the cycling performance of a battery.

The A-block containing a structural unit represented by formula II with $R_7$ being cyano, a structural unit represented by formula II with $R_7$ being an ester group, and a structural unit represented by formula II with $R_7$ being a substituted or unsubstituted aromatic group at the same time is also beneficial to further improving the binding force and flexibility of an electrode plate.

In some embodiments, the A-block contains a structural unit represented by formula II with $R_7$ being cyano, a structural unit represented by formula II with $R_7$ being amido, and a structural unit represented by formula II with $R_7$ being an ester group.

The A-block containing a structural unit represented by formula II with $R_7$ being cyano, a structural unit represented by formula II with $R_7$ being amido, and a structural unit represented by formula II with $R_7$ being an ester group at the same time can ensure that the electrode plate has both a low film layer resistance and an excellent binding force and flexibility, and meanwhile can significantly reduce the metal deposition amount of the battery, thereby enabling the battery to have both a low direct current impedance growth rate, and a high cycle capacity retention rate and a high capacity retention rate at 45°C.

In some embodiments, $R_7$ in formula II is optionally one or two of carboxyl and hydroxyl.

In some embodiments, the structural unit represented by formula II is derived from a group consisting of acrylonitrile, butenenitrile, styrene, vinyl alcohol, acrylamide, ethyl acrylate, ethyl methacrylate, butyl methacrylate, methacrylic acid, ethylacrylic acid, methacrylamide, N-methacrylamide, N-methylmethacrylamide, N-isopropylacrylamide, N-isopropylmethacrylamide, N-tert-butylacrylamide, N-tert-butyl(meth)acrylamide, N,N-dimethylacrylamide, N,N-dimethylmethacrylamide, N,N-diethylacrylamide, N,N-diethylmethacrylamide, acrylic acid, vinylbenzoic acid, allyl acetate, an acrylate, and combinations thereof.

In some embodiments, the structural unit represented by formula I is derived from a group consisting of vinylidene fluoride, tetrafluoroethylene, vinyl fluoride, hexafluoropropene, and combinations thereof.

In some embodiments, the BAB block copolymer is one of a polyvinylidene fluoride-poly(acrylonitrile-butyl methacrylate-styrene)-polyvinylidene fluoride block copolymer, a polyvinylidene fluoride-polyacrylamide-polyvinylidene fluoride block copolymer, a polyvinylidene fluoride-poly(acrylic acid-acrylamide-ethyl methacrylate-polyvinylidene fluoride block copolymer, a polyvinylidene fluoride-poly(acrylonitrile-acrylamide-acrylate)-polyvinylidene fluoride block copolymer, a polyvinylidene fluoride-polystyrene-polyvinylidene fluoride block copolymer, a polyvinylidene fluoride-polyethylene oxide-polyvinylidene fluoride block copolymer, a polyvinylidene fluoride-polyvinyl alcohol-polyvinylidene fluoride block copolymer, a polyvinylidene fluoride-poly(acrylonitrile-allyl acetate)-polyvinylidene fluoride block copolymer, a polyvinyl fluoride-poly(acrylonitrile-butyl methacrylate-styrene)-polyvinyl fluoride block copolymer, and a polytetrafluoroethylene-poly(acrylonitrile-butyl methacrylate-styrene)-polytetrafluoroethylene block copolymer.

In some embodiments, the mass content of the A-block is 40% - 60%, based on the total mass of the block copolymer. In some embodiments, the mass content of the A-block is optionally 40%, 42%, 44%, 45%, 46%, 48%, 50%, 42%, 54%, 54%, 55%, 56%, 58%, and 60%, based on the total mass of the block copolymer.

The BAB-type block copolymer with the mass content of A-block in a suitable range can improve the binding force and flexibility of an electrode plate, reduce the film layer resistance of an electrode plate, improve the cycle capacity retention rate and the capacity retention rate at 45°C of a battery, and reduce the direct current impedance growth rate and metal deposition amount of the battery.

In some embodiments, the block copolymer has a weight-average molecular weight of 400,000 - 2,000,000. In some embodiments, the weight-average molecular weight of the block copolymer is optionally 400,000, 420,000, 450,000, 480,000, 500,000, 550,000, 600,000, 650,000, 700,000, 750,000, 800,000, 850,000, 900,000, 950,000, 1,000,000, 1,100,000, 1,200,000, 1,300,000, 1,400,000, 1,500,000, 1,600,000, 1,700,000, 1,800,000, 1,900,000, and 2,000,000.

Herein, the term "weight average molecular weight" refers to the sum of the weight fractions of molecules with different molecular weights in the polymer multiplied by their corresponding molecular weights.

In the present application, the weight-average molecular weight of the polymer can be tested by a method known in the art, such as gel chromatography using Waters 2695 Isocratic HPLC gel chromatograph (differential refractive index detector 2141). A polystyrene solution sample with a mass fraction of 3.0% is used as a reference, and a matched chromatographic column (oily: Styragel HT5 DMF 7.8 × 300 mm + Styragel HT4) is selected. A purified N-methylpyrrolidone (NMP) solvent is used to prepare a 3.0% of a fluoropolymer solution, and the prepared solution is allowed to stand for one day for later use. During the test, tetrahydrofuran is sucked with a syringe first for rinse, and this process is repeated several times. Then 5 ml of the test solution is sucked, the air in the syringe is removed, and the needle tip is wiped to dry. Finally, the sample solution is slowly injected into the injection port. The data are acquired after the readings are stable, thus reading the weight-average molecular weight.

If the weight-average molecular weight of the block copolymer is too large, the binder is difficult to be dissolved and likely to agglomerate with a conductive agent, which would increase the internal resistance of the film layer, and

furthermore increase the viscosity of a slurry, reduce the dispersibility of the substances in the slurry and affect the flexibility of an electrode plate. If the weight-average molecular weight of the block copolymer is too small, it is difficult to form a three-dimensional network binding structure and cannot play an effective binding role.

The BAB block copolymer with a weight-average molecular weight within a suitable range can improve the binding force of the electrode plate, reduce the direct current impedance growth rate and metal deposition amount of the battery, and also ensure that the electrode plate has both a low film layer resistance and excellent flexibility and the battery has both a high cycle capacity retention rate and a high capacity retention rate at 45°C.

In some embodiments, the A-block in the block copolymer has a weight-average molecular weight of 200,000 - 1,100,000. In some embodiments, the weight-average molecular weight of the A-block in the block copolymer optionally is 200,000, 250,000, 300,000, 350,000, 400,000, 450,000, 500,000, 550,000, 600,000, 650,000, 700,000, 750,000, 800,000, 850,000, 900,000, 950,000, 1,000,000, 1,050,000, and 1,100,000.

If the weight-average molecular weight of the A-block in the block copolymer is too large, the structural unit of a monomer shown in formula II or formula III has too many strong polar groups, which affects the stability of a slurry; and if the weight-average molecular weight of the A-block in the block copolymer is too small, the binding force of the electrode plate is reduced.

The BAB block copolymer with the weight-average molecular weight of A-block within a suitable range can improve the binding force of the electrode plate, reduce the direct current impedance growth rate and metal deposition amount of the battery, and also ensure that the electrode plate has both a low film layer resistance and excellent flexibility and the battery has both a high cycle capacity retention rate and a high capacity retention rate at 45°C.

In some embodiments, each B-block in the block copolymer has a weight-average molecular weight of 100,000 - 500,000. In some embodiments, the weight-average molecular weight of each B-block in the block copolymer is optionally 100,000, 120,000, 150,000, 170,000, 200,000, 220,000, 250,000, 280,000, 300,000, 320,000, 350,000, 370,000, 400,000, 430,000, 450,000, 470,000, and 500,000.

The BAB block copolymer with the weight-average molecular weight of each B-block within a suitable range can improve the binding force of the electrode plate, reduce the direct current impedance growth rate and metal deposition amount of the battery, and also ensure that the electrode plate has both a low film layer resistance and excellent flexibility and the battery has both a high cycle capacity retention rate and a high capacity retention rate at 45°C.

In one embodiment of the present application, a method for preparing a BAB-type block copolymer is provided, which comprises the following steps:

preparation of B-block: polymerizing at least one monomer represented by formula V to prepare the B-block,

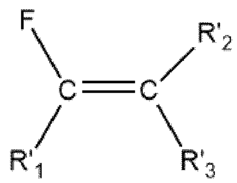

Formula V

wherein $R'_1$, $R'_2$ and $R'_3$ are each independently selected from one or more of hydrogen, fluorine, and $C_{1-3}$ alkyl containing at least one fluorine atom;

preparation of A-block: polymerizing at least one monomer represented by formula VI to prepare the A-block, or subjecting a monomer represented by formula VII to ring-opening polymerization to prepare the A-block,

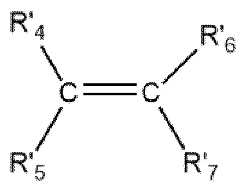

Formula VI

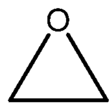

Formula VII

wherein $R'_4$, $R'_5$ and $R'_6$ are each independently selected from hydrogen and substituted or unsubstituted $C_{1-5}$ alkyl, and $R'_7$ is selected from one of carboxyl, an ester group, hydroxyl, amido, cyano, and a substituted or unsubstituted

aromatic group; and
preparation of BAB-type block copolymer: connecting the B-blocks with the A-block to prepare the BAB-type block copolymer.

The preparation method involves cheap raw materials, can reduce costs and the pollution to the environment, and is beneficial to improving the production of the binder. Moreover, the binder prepared by using the method can effectively improve the binding force of the electrode plate, reduce the direct current impedance growth rate and metal deposition amount of the battery, and also ensure that the electrode plate has both a low film layer resistance and excellent flexibility and the battery has both a high cycle capacity retention rate and a high capacity retention rate at 45°C.

In some embodiments, the method for preparing the B-block comprises:
reacting at least one monomer represented by formula V, a chain transfer agent and a first initiator at a reaction temperature of 60-75°C for 4-6 hours by means of reversible addition-fragmentation chain transfer polymerization to obtain the B-block with an azido or alkynyl group at the tail end.

Herein, the term "azido" refers to a -$N_3$ group.

Herein, the term "alkynyl" refers to a -C=CH group.

Herein, the term "reversible addition-fragmentation chain transfer polymerization" (RAFT polymerization) is a reversible deactivation radical polymerization, which is also known as the "living"/controlled radical polymerization method. The main principle of RAFT polymerization is to protect easily terminated radicals by means of chain transfer by adding an RAFT reagent as a chain transfer reagent in the radical polymerization, so that most radicals are transformed into dormant species radicals in the polymerization reaction. During the reaction, the dormant and active segments coexist and rapidly switch with each other by means of a dynamic and reversible reaction. As a result, only a few polymer chains exist and grow in the form of active chains at any moment, and finally the growth probability of each polymer segment is roughly equal, thus showing the characteristics of active polymerization.

In some embodiments, the schematic diagram of the synthesis route of B-block is shown in the figure below, where the chain transfer agent is trithiocarbonate, Z' is an active group with an alkynyl or azido group at the tail end, and R is alkyl. The B-block with an alkynyl or azido group at the tail end is prepared via the following reaction.

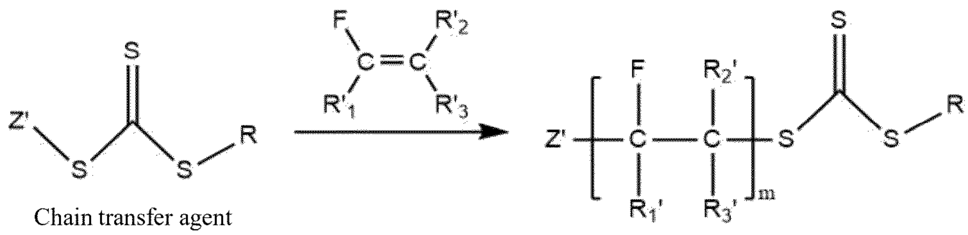


By means of the reversible addition-fragmentation chain transfer polymerization, controllable polymerization can be realized, and the molecular weight distribution of the product is narrow. Moreover, after the above reaction, the B-block only has an alkynyl or azido group at the tail end, which facilitates the directional connection with the A-block in an efficient and gentle manner to generate a BAB-type block copolymer.

In some embodiments, the method for preparing the A-block comprises:
subjecting a monomer represented by formula VI and a second initiator to a polymerization reaction at a reaction temperature of 80-95°C for 2.5-5 hours to obtain an A-block with alkynyl or azido groups at both ends.

In some embodiments, the synthesis route of the A-block is as follows. Under the action of a first initiator, the monomer represented by formula I undergoes a polymerization reaction to generate the A-block. Since the end groups on both sides of the first initiator are halogen-substituted alkyl or trimethylsilyl acetylene groups, the halogen or trimethylsilyl groups on both sides of the A-block are easily replaced, such that both ends of the A-block have azido or alkynyl groups (in the figure below, Bi is a halogen-substituted alkyl or trimethylsilyl acetylene group, and $B_2$ is an azido or alkynyl group).

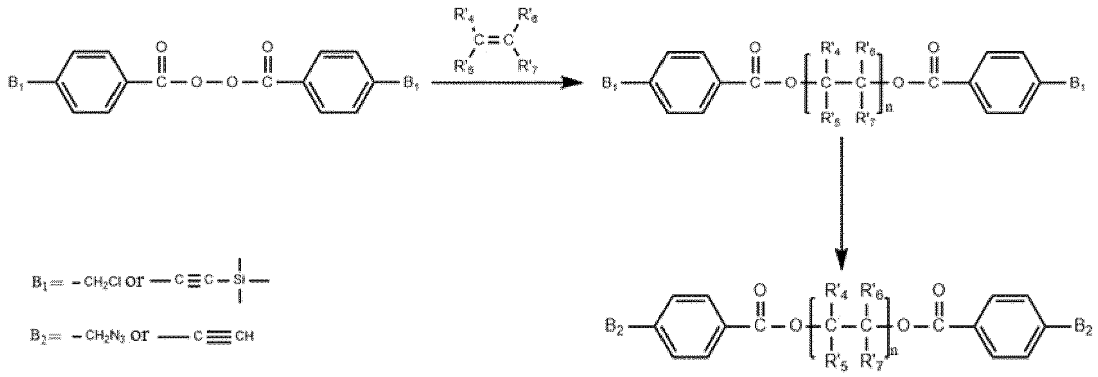

The A-block with terminal azidation or alkynylation at both ends prepared by this preparation method facilitates the inter-block connection between the A-block and the B-blocks in an efficient and gentle manner to generate a BAB-type block copolymer.

In some embodiments, the method for preparing the A-block comprises:

subjecting a monomer represented by formula VII, an ionic initiator and water to a polymerization reaction at a reaction temperature of 60-80°C for 6-8 hours to obtain a product with hydroxyl at both ends; and
subjecting the hydroxyl of the product to a functionalization reaction to obtain the A-block with alkynyl or azido groups at both ends.

In some embodiments, the synthesis route of the A-block is as follows. Under the action of a first initiator, the monomer represented by formula I undergoes a polymerization reaction to generate the A-block. Since the end groups on both sides of the first initiator are halogen-substituted alkyl or trimethylsilyl acetylene groups, the halogen or trimethylsilyl groups on both sides of the A-block are easily replaced, such that both ends of the A-block have azido or alkynyl groups (in the figure below, Bi is a halogen-substituted alkyl or trimethylsilyl acetylene group, and $B_2$ is an azido or alkynyl group).

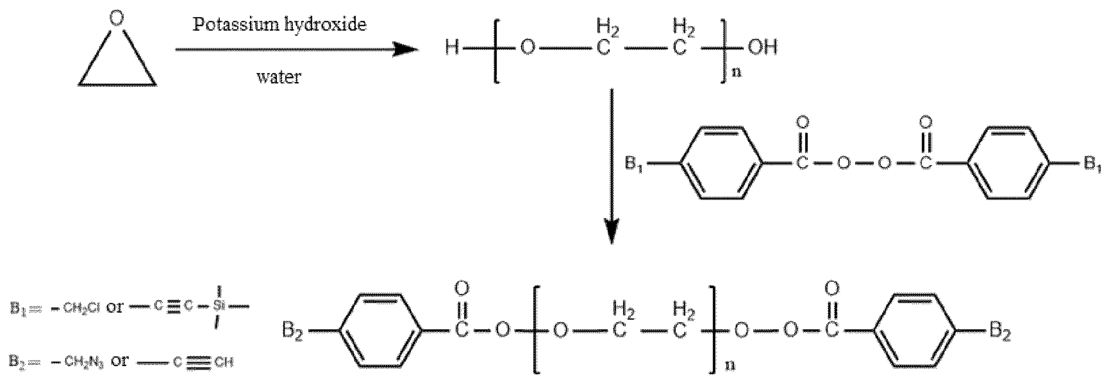


The A-block with terminal azidation or alkynylation at both ends prepared by this preparation method facilitates the inter-block connection between the A-block and the B-blocks in an efficient and gentle manner to generate a BAB-type block copolymer.

In some embodiments, the preparation of the BAB-type block copolymer comprises:
mixing the A-block having azido or alkynyl groups at both ends and the B-blocks having an alkynyl or azido group at the tail end, and subjecting same to a click reaction to prepare the BAB-type block copolymer, wherein the end groups of the A-block and the B-blocks are different.

Herein, the term "click reaction" refers to the cycloaddition reaction between alkynyl and azido , such that the A-block is connected with the B-blocks. In some embodiments, the click reaction is carried out at an ambient temperature and a normal pressure in the presence of a Cu(I) catalyst.

In some embodiments, the end groups of the A-block are azido groups, and the end groups of the B-block are alkynyl groups.

In some embodiments, the end groups of the A-block are alkynyl groups, and the end groups of the B-block are azido groups.

The preparation method above has advantages of a high yield, harmless by-products, simple and mild reaction conditions, and readily available reaction raw materials, which can achieve the controllable polymerization of the block

polymer and is beneficial to improving the yield of the product.

In some embodiments, the chain transfer agent is an RAFT chain transfer agent containing a terminal alkynyl or azido group. In some embodiments, the chain transfer agent is trithiocarbonate containing a terminal alkynyl or azido group. In some embodiments, the structural formula of the chain transfer agent is selected the following formulae,

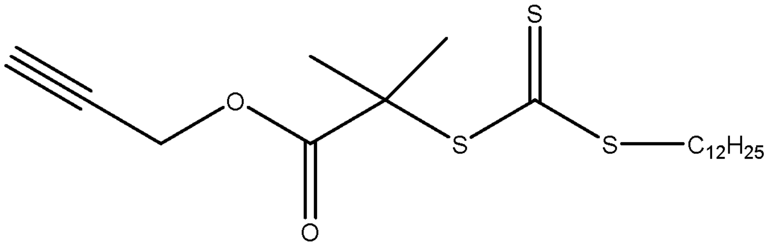

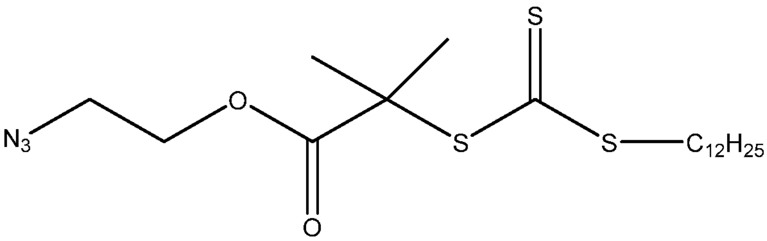

The RAFT chain transfer agents containing a terminal alkynyl or azido group enable the B-block to bear an alkynyl or azido group at the tail end thereof during the synthesis of the B-block, which provides a basis for the click reaction between the B-blocks and the A-block and avoids complex post-processing steps, thereby improving the reaction efficiency.

In some embodiments, the second initiator is a symmetrical bifunctional initiator. In some embodiments, the second initiator is 4-(chloromethyl) benzoyl peroxide. The symmetrical bifunctional initiator enables the A-block to symmetrically bear the same active functional group on both sides, which contributes to the simultaneous azidation or alkynylation of the end groups on both sides of the A-block.

In some embodiments, the first initiator is selected from one or two of azobisisobutyronitrile and azobisisoheptonitrile. The azo initiator is a common initiator for radical polymerization, which is easy to decompose and form radicals, thereby facilitating the initiation of radical polymerization.

In some embodiments, the BAB-type block copolymer can be applied in a secondary battery, and optionally the secondary battery includes at least one of a lithium ion battery, a sodium ion battery, a magnesium ion battery, or a potassium ion battery.

[Positive electrode plate]

The positive electrode plate comprises a positive electrode current collector and a positive electrode film layer provided on at least one surface of the positive electrode current collector, wherein the positive electrode film layer comprises a positive electrode active material, a conductive agent and a binder, and the binder is a BAB-type block copolymer according to some embodiments or a BAB-type block copolymer prepared by a preparation method according to some embodiments.

The positive electrode plate has excellent flexibility and binding force, as well as a low film layer resistance.

In some embodiments, the binding force per unit length between the positive electrode film layer and the positive electrode current collector is not less than 11 N/m. In some embodiments, the binding force per unit length between the positive electrode film layer and the positive electrode current collector is optionally 11 N/m, 11.5 N/m, 12 N/m, 12.5 N/m, 13 N/m, 13.5 N/m, 14 N/m, 14.5 N/m, 15 N/m, 15.5 N/m, 16 N/m, 16.5 N/m, 17 N/m, 17.5 N/m, 18N/m, 18.5 N/m, 19 N/m, 19.5 N/m, and 20 N/m.

The binding force per unit length between the positive electrode film layer and the positive electrode current collector can be tested by any well-known method in the art, such as referring to the GB-T2790-1995 national standard "Experimental Method for 180° Peel Strength of Adhesives." As an example, the positive electrode plate is cut into a test sample with a size of 20 mm × 100 mm for later use; a double-sided adhesive tape is adhered onto the positive electrode film layer side of the electrode plate and compacted with a pressing roller, thus enabling the double-sided adhesive tape to be completely attached to the electrode plate; the other side of the double-sided adhesive tape is adhered to the surface of a stainless steel, and then one end of the sample is bent reversely with a bending angle of 180°; and a high-speed tension

machine is used for testing, one end of the stainless steel is fixed to the clamp below the tension machine, and the bent end of the sample is fixed to the clamp above the tension machine; and the angle of the sample is adjusted to ensure that the upper and lower ends are in vertical positions, then the sample is stretched at a speed of 50 mm/min until the positive electrode current collector is completely peeled off from a positive electrode film layer, and the displacement and force during the process are recorded. The binding force per unit length of the electrode plate is calculated by dividing the force at equilibrium by the width of the electrode plate attached to the double-sided adhesive tape (the width direction of the electrode plate is perpendicular to the peeling direction). In this test, the width of the electrode plate is 20 mm.

In virtue of a high binding strength between the positive electrode film layer and the positive electrode current collector of the electrode plate, the positive electrode film layer is not prone to falling off from the positive electrode current collector during use, which is helpful to improve the cycling performance and safety of the battery.

In some embodiments, the phenomenon of light transmission through the positive electrode plate will not occur until the positive electrode plate is subjected to bending tests not less than 3 times. In some embodiments, the phenomenon of light transmission through the positive electrode plate will not occur until the positive electrode plate is subjected to bending tests not less than 3.3, 3.5, 3.7 or 4 times.

The flexibility of the positive electrode plate can be tested by a well-known method. As an example, the positive electrode plate after cold pressing is cut into a test sample with a size of 20 $\times$ 100 mm. The test sample is folded forward in half and flattened with a pressing roller of 2 kg, and then it is unfolded to check against light whether there is light transmission in the gap; if there is no light transmission, the test sample is folded backward in half and flattened with a pressing roller of 2 kg, and then it is unfolded to check against light again; and this process is repeated until there is light transmission in the gap and the number of folding is recorded. The test is repeated three times and the average value is taken as reference data of the flexibility of the electrode plate.

The positive electrode plate can be subjected to bending tests not less than 3 times, indicating that the electrode plate has a good flexibility and is not prone to cracking during the production process or brittle failure during use, which is helpful to improve the yield of the battery and the safety performance of the battery.

In some embodiments, the film layer resistance of the positive electrode plate is less than or equal to 1.0 $\Omega$.

The film layer resistance refers to the resistance of the positive electrode film layer of the electrode plate, which can be tested by any well-known method in the art. As an example, a resistance meter can be used for testing.

The film layer resistance can be tested by a well-known method, and as an example, small discs having a diameter of 3 mm are cut at the left, middle, and right sides of the electrode plate respectively. The indicator light of the IEST electrode plate resistance meter is turned on, and placed at an appropriate position of the "probe" of the film layer resistance meter, the "start" button is clicked, and the reading can be read once it is stable. Each small disc is tested at two positions, and finally the average value of six measurements is calculated, which is the film layer resistance of the electrode plate.

The electrode plate has a relatively low film layer resistance, indicating that materials in the positive electrode film layer are uniformly dispersed, and the positive electrode film layer has good electron transport efficiency, which is conductive to fulfilling the performance of the battery.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode active material can be a positive electrode active material known in the art for batteries. As an example, the positive electrode active material may comprise at least one of the following materials: a lithium-containing phosphate of an olivine structure, a lithium metal oxide, and their respective modified compounds. However, the present application is not limited to these materials, and other conventional materials that can be used as positive electrode active materials for batteries may also be used. These positive electrode active materials may be used alone or in combination of two or more. Herein, examples of lithium metal oxides may include, but are not limited to, at least one of lithium cobalt oxide (e.g. $LiCoO_2$), lithium nickel oxide (e.g. $LiNiO_2$), lithium manganese oxide (e.g. $LiMnO_2$, $LiMn_2O_4$), lithium nickel cobalt oxide, lithium manganese cobalt oxide, lithium nickel manganese oxide, lithium nickel cobalt manganese oxide (e.g. $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), lithium nickel cobalt aluminum oxide (e.g. $LiNi_{0.85}Co_{0.15}Al_{0.05}O_2$), and modified compounds thereof, and the like. Examples of lithium-containing phosphates of olivine structure may include, but are not limited to, at least one of lithium iron phosphate (e.g., $LiFePO_4$ (also referred to as LFP)), lithium iron phosphate and

carbon composites, lithium manganese phosphate (e.g., $LiMnPO_4$), lithium manganese phosphate and carbon composites, lithium iron manganese phosphate, and lithium iron manganese phosphate and carbon composites.

In some embodiments, the positive electrode film layer also optionally comprises a conductive agent. As an example, the conductive agent may comprise at least one of superconducting carbon, acetylene black, carbon black, Ketjen black, carbon dots, carbon nanotubes, graphene, and carbon nanofibers.

In some embodiments, the positive electrode plate can be prepared by dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry, followed by the procedures such as drying and cold pressing, so as to obtain the positive electrode plate.

[Negative electrode plate]

The negative electrode plate comprises a negative electrode current collector and a negative electrode film layer provided on at least one surface of the negative electrode current collector, wherein the negative electrode film layer comprises a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries, as an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, a silicon oxide, a silicon carbon composite, a silicon nitrogen composite, and a silicon alloy. The tin-based material may be selected from at least one of elemental tin, a tin oxide, and a tin alloy. However, the present application is not limited to these materials, and other conventional materials that can be used as negative electrode active materials for batteries can also be used. These negative electrode active materials may be used alone or as a combination of two or more.

In some embodiments, the negative electrode film layer may optionally comprise a binder. The binder may be selected from at least one of a styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may optionally comprise a conductive agent. The conductive agent may be selected from at least one of superconductive carbon, acetylene black, carbon black, Ketjen black, carbon dots, carbon nanotubes, graphene, and carbon nanofibers.

In some embodiments, the negative electrode film layer may optionally comprise other auxiliary agents, such as thickener (e.g. sodium carboxymethyl cellulose (CMC-Na)), etc.

In some embodiments, the negative electrode plate can be prepared by dispersing the above-mentioned components for preparing the negative electrode plate, such as negative electrode active material, conductive agent, binder and any other components, in a solvent (e.g., deionized water) to form a negative electrode slurry; and coating a negative electrode current collector with the negative electrode slurry, followed by procedures such as drying and cold pressing, so as to obtain the negative electrode plate.

[Electrolyte]

The electrolyte functions to conduct ions between the positive electrode plate and the negative electrode plate. The type of the electrolyte is not specifically limited in the present application and can be selected as necessary. For example, the electrolyte may be in a liquid state, a gel state or an all-solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium

dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, an electrolyte solution further optionally comprises an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

[Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard housing, for example, a hard plastic housing, an aluminum housing, a steel housing, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

[Secondary battery]

The shape of the secondary battery is not particularly limited in the present application and may be cylindrical, square or of any other shape. For example, Fig. 2 shows a secondary battery 5 with a square structure as an example. The secondary battery may also be a sodium ion battery, a magnesium ion battery, or a potassium ion battery.

In some embodiments, with reference to Fig. 3, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate, and the separator may be subjected to a winding process or a laminating process to form an electrode assembly 52. The electrode assembly 52 is packaged in the accommodating cavity. The electrolyte solution infiltrates the electrode assembly 52. The number of the electrode assemblies 52 contained in the secondary battery 5 may be one or more, and can be selected by those skilled in the art according to actual requirements.

[Battery module]

In some embodiments, the secondary battery can be assembled into a battery module, and the number of the secondary batteries contained in the battery module may be one or more, and the specific number can be selected by those skilled in the art according to the application and capacity of the battery module.

Fig. 4 shows a battery module 4 as an example. Referring to Fig 4, in the battery module 4, a plurality of secondary batteries 5 may be arranged in sequence in a length direction of the battery module 4. Apparently, the secondary batteries may also be arranged in any other manner. Furthermore, the plurality of secondary batteries 5 may be fixed by fasteners.

Optionally, the battery module 4 may further comprise an outer housing with an accommodating space, and the plurality of secondary batteries 5 are accommodated in the accommodating space.

[Battery pack]

In some embodiments, the above battery module may also be assembled into a battery pack, the number of the

battery modules contained in the battery pack may be one or more, and the specific number can be selected by those skilled in the art according to the application and capacity of the battery pack.

Fig. 5 and Fig. 6 show a battery pack 1 as an example. With reference to Fig. 5 and Fig. 6, the battery pack 1 may comprise a battery box and a plurality of battery modules 4 provided in the battery box. The battery box comprises an upper box body 2 and a lower box body 3, wherein the upper box body 2 may cover the lower box body 3 to form a closed space for accommodating the battery modules 4. The plurality of the battery modules 4 may be arranged in the battery box in any manner.

[Power consuming device]

In one embodiment of the present application, a power consuming device is provided, which comprises at least one of a secondary battery of any embodiment, a battery module of any embodiment or a battery pack of any embodiment.

The power consuming device comprises at least one of the secondary battery, battery module or battery pack provided by the present application. The secondary battery, the battery module or the battery pack may be used as a power supply or an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As a power consuming device, the secondary battery, battery module or battery pack can be selected according to the usage requirements thereof.

Fig. 7 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

## Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product instructions. The reagents or instruments used therein on which no manufacturers are specified are all commercially available conventional products.

## I. Preparation method

Example 1

1) Preparation of binder

preparation of B-block: A RAFT chain transfer agent (CTA-alkyne) was used as a chain transfer agent, and an alkynyl-terminated polyvinylidene fluoride was prepared via a polymerization reaction. The structural formula of the RAFT chain transfer agent was as follows:

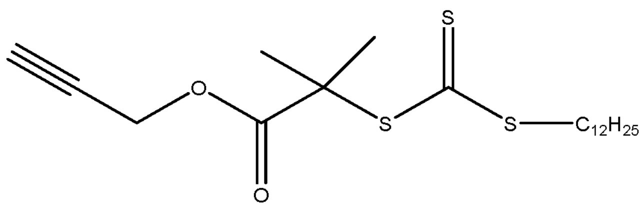

4 g ot vinylidene fluoride was weighed, 500 ml ot tetrahydroturan was taken, both were added to a four-neck flask, a large amount of nitrogen was introduced, the stirring speed was gradually increased to 1200 rpm, 1% of a RAFT chain transfer agent (CTA-alkyne) relative to the mass of the monomer and 0.1% of azodiisobutyronitrile relative to the mass of the monomer were added, and the flask was heated to 75°C. After 6 hours of reaction, the reaction was terminated by

cooling in liquid nitrogen, and the solution was precipitated in a large amount of excess methanol. The polymer was collected by filtration and reprecipitated twice from chloroform with methanol. The resulting product was dried under vacuum at room temperature overnight to remove all traces of residual solvents to obtain polyvinylidene fluoride with an alkynyl at the tail end, i.e., a B-block polymer.

The reaction process for preparing the B-block polymer was as follows:

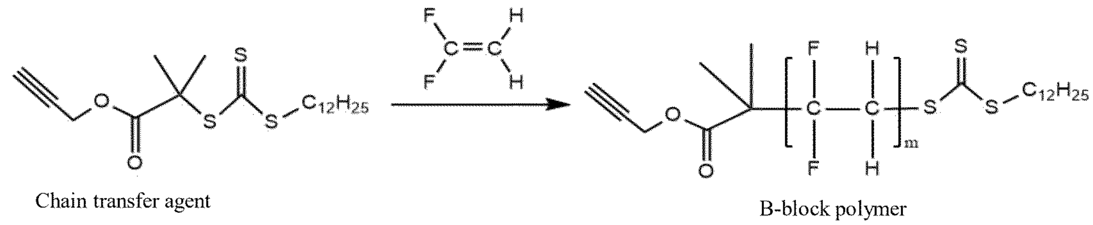


preparation of A-block: An azide was used as an initiator, and azide-terminated poly(acrylonitrile-butyl methacrylate-styrene) was prepared via a polymerization reaction.

1% of 4-(chloromethyl) benzoyl peroxide relative to the mass of the monomers was dissolved in 300 ml of anhydrous acetonitrile, and then the solution was introduced into a high-pressure reactor and purged with $N_2$ for 30 minutes. Then, an acrylonitrile monomer, a butyl methacrylate monomer and a styrene monomer were respectively weighed at a molar ratio of 8 : 1 : 1 and transferred to the reactor at room temperature. The temperature inside the reactor was increased to 90°C, and the reaction mixture was stirred at a speed of 500 rpm for another 3 hours. The reactor was cooled with water to room temperature and depressurized to remove unreacted monomers. The solvent was removed under vacuum, and the resulting solid was washed several times with chloroform to remove the initiator residue. Finally, the polymer was dried under vacuum at 45°C to obtain a white product. 3 mmol of chlorine-terminated poly(acrylonitrile-butyl methacrylate-styrene) and 60 mmol of sodium azide ($NaN_3$) were dissolved in 600 ml of N,N-dimethylformamide (DMF) and the mixture was stirred at 60°C overnight. The polymer solution was concentrated and precipitated three times in a mixed solvent (the volume ratio of methanol to water was 1 : 1). Then the pale yellow product was dried under vacuum at 45°C to obtain poly(acrylonitrile-butyl methacrylate-styrene) comprising azides at both ends, i.e., an A-block polymer.

preparation of BAB-type block copolymer:
Poly(acrylonitrile-butyl methacrylate-styrene) with azido groups at both ends, polyvinylidene fluoride with an alkynyl group at the tail end and cuprous bromide were added at a molar ratio of 1 : 2.5 : 4 to a dry Schlenk tube and degassed, and then 4 ml of anhydrous N,N-dimethy formamide (DMF) and 0.14 mmol of N,N,N',N',N'-pentamethyl diethylene triamine (PMDETA) were added. After reaction under stirring at 60°C for 3 days, the reaction was terminated by exposure to air. The reaction mixture was filtered through a neutral alumina column to remove the copper catalyst, the solution was concentrated under reduced pressure and precipitated in 20 times excess of a mixed solvent (the volume ratio of methanol to water was 1 : 1), followed by filtration to collect a product, and the product was dried under vacuum to obtain a polyvinylidene fluoride-poly(acrylonitrile-butyl methacrylate-styrene)-polyvinylidene fluoride block copolymer with a weight-average molecular weight of 1,200,000, which is used as a battery binder.

2) Preparation of positive electrode plate

A lithium nickel cobalt manganese (NCM) material, a conductive agent of carbon black, the binder prepared in example 1 and N-methylpyrrolidone (NMP) were mixed at a weight ratio of 96.9 : 2.1 : 1 : 21 and stirred until uniform to obtain a positive electrode slurry with a solid content of 73%; and the positive electrode slurry was then uniformly coated onto a positive electrode current collector, followed by drying, cold pressing, and slitting to obtain the positive electrode plate.

3) Preparation of negative electrode plate

An active material of artificial graphite, a conductive agent of carbon black, a binder of styrene butadiene rubber (SBR) and a thickener of sodium hydroxymethylcellulose (CMC) were dissolved into a solvent of deionized water at a weight ratio of 96.2 : 0.8 : 0.8 : 1.2, followed by uniformly mixing to prepare a negative electrode slurry; and the negative electrode slurry was uniformly coated onto a negative electrode current collector of a copper foil one or more times, followed by drying, cold pressing, and slitting to obtain the negative electrode plate.

4) Separator

A polypropylene film was used as a separator.

5) Preparation of electrolyte solution

In an argon atmosphere glove box ($H_2O$ < 0.1 ppm, $O_2$ < 0.1 ppm), organic solvents of ethylene carbonate (EC)/ethyl methyl carbonate (EMC) were uniformly mixed in a volume ratio of 3/7, and 12.5% of a lithium salt of $LiPF_6$ was dissolved in the organic solvents and stirred until uniform to obtain the electrolyte solution in example 1.

6) Preparation of battery

The positive electrode plate, the separator and the negative electrode plate were stacked in sequence and then wound to obtain a bare cell, wherein the separator was positioned between the positive electrode plate and the negative electrode plate and functions for isolation; the bare cell was welded with tabs and put into an aluminum housing and baked at 80°C for water removal, and the electrolyte solution was subsequently injected therein, followed by sealing to obtain a uncharged battery. The uncharged battery was then successively subjected to procedures such as leaving to stand, hot and cold pressing, formation, shaping, and capacity tests to obtain a lithium ion battery product of example 1.

Examples 2-5

The batteries of examples 2-5 were prepared by a method similar to that of the battery of example 1, except that only the weight-average molecular weight and the mass content of the A-block and the B-block were adjusted respectively, and the weight-average molecular weight of the polyvinylidene fluoride-poly(acrylonitrile-butyl methacrylate-styrene)-polyvinylidene fluoride block copolymer was maintained at 1,200,000. The specific parameters were shown in Table 1.

Examples 6-9

The batteries of examples 6-9 were prepared by a method similar to that of the battery of example 1, except that the weight-average molecular weight of the polyvinylidene fluoride-poly(acrylonitrile-butyl methacrylate-styrene)-polyvinylidene fluoride block copolymer was adjusted by adjusting the weight-average molecular weight and the mass content of the A-block and the B-block respectively. The specific parameters were shown in Table 1.

Example 10

The battery of example 10 was prepared by a method similar to that of the battery of example 1, except that the A-block was replaced with polyacrylamide with azido groups at both ends. The specific parameters were shown in Table 1, and the preparation method was as follows:
1% of 4-(chloromethyl) benzoyl peroxide relative to the mass of the monomers was dissolved in 300 ml of anhydrous acetonitrile, and then the solution was introduced into a high-pressure reactor and purged with $N_2$ for 30 minutes. A certain molar amount of an acrylamide monomer was then weighed and transferred to the reactor at room temperature. The temperature inside the reactor was increased to 90°C, and the reaction mixture was stirred at a speed of 500 rpm for another 3 hours. The reactor was cooled with water to room temperature and depressurized to remove unreacted monomers. The solvent was removed under vacuum, and the resulting solid was washed several times with chloroform to remove the initiator residue. Finally, the polymer was dried under vacuum at 45°C to obtain a white product. 3 mmol of chlorine-terminated polyacrylamide and 60 mmol of sodium azide ($NaN_3$) were dissolved in 600 ml of N,N-dimethylformamide (DMF) and the mixture was stirred at 60°C overnight. The polymer solution was concentrated and precipitated three times in a mixed solvent (the volume ratio of methanol to water was 1 : 1). Then the pale yellow product was dried under vacuum at 45°C to obtain polyacrylamide comprising azides at both ends, i.e., an A-block polymer.

Example 11

The battery of example 11 was prepared by a method similar to that of the battery of example 1, except that the A-block was replaced with poly(acrylic acid-acrylamide-ethyl methacrylate) with azido groups at both ends. The specific parameters were shown in Table 1, and the preparation method was as follows:
1% of 4-(chloromethyl) benzoyl peroxide relative to the mass of the monomers was dissolved in 300 ml of anhydrous acetonitrile, and then the solution was introduced into a high-pressure reactor and purged with $N_2$ for 30 minutes. Then, an acrylic acid monomer, an acrylamide monomer and an ethyl methacrylate monomer were respectively weighed at a molar ratio of 8 : 1 : 1 and transferred to the reactor at room temperature. The temperature inside the reactor was increased to 90°C, and the reaction mixture was stirred at a speed of 500 rpm for another 3 hours. The reactor was cooled with water to room temperature and depressurized to remove unreacted monomers. The solvent was removed under vacuum, and the resulting solid was washed several times with chloroform to remove the initiator residue. Finally, the polymer was dried

under vacuum at 45°C to obtain a white product. 3 mmol of chlorine-terminated poly(acrylic acid-acrylamide-ethyl methacrylate) and 60 mmol of sodium azide ($NaN_3$) were dissolved in 600 ml of N,N-dimethylformamide (DMF) and the mixture was stirred at 60°C overnight. The polymer solution was concentrated and precipitated three times in a mixed solvent (the volume ratio of methanol to water was 1:1). Then the pale yellow product was dried under vacuum at 45°C to obtain poly(acrylic acid-acrylamide-ethyl methacrylate) comprising azides at both ends, i.e., an A-block polymer.

Example 12

The battery of example 12 was prepared by a method similar to that of the battery of example 1, except that the A-block was replaced with poly(acrylonitrile-acrylamide-acrylate) with azido groups at both ends. The specific parameters were shown in Table 1, and the preparation method was as follows:
1% of 4-(chloromethyl) benzoyl peroxide relative to the mass of the monomers was dissolved in 300 ml of anhydrous acetonitrile, and then the solution was introduced into a high-pressure reactor and purged with $N_2$ for 30 minutes. Then, an acrylonitrile monomer, an acrylamide monomer and an acrylate monomer were respectively weighed at a molar ratio of 8 : 1 : 1 and transferred to the reactor at room temperature. The temperature inside the reactor was increased to 90°C, and the reaction mixture was stirred at a speed of 500 rpm for another 3 hours. The reactor was cooled with water to room temperature and depressurized to remove unreacted monomers. The solvent was removed under vacuum, and the resulting solid was washed several times with chloroform to remove the initiator residue. Finally, the polymer was dried under vacuum at 45°C to obtain a white product. 3 mmol of chlorine-terminated poly(acrylonitrile-acrylamide-acrylate) and 60 mmol of sodium azide ($NaN_3$) were dissolved in 600 ml of N,N-dimethylformamide (DMF) and the mixture was stirred at 60°C overnight. The polymer solution was concentrated and precipitated three times in a mixed solvent (the volume ratio of methanol to water was 1 : 1). Then the pale yellow product was dried under vacuum at 45°C to obtain poly(acrylonitrile-acrylamide-acrylate) comprising azides at both ends, i.e., an A-block polymer.

Example 13

The battery of example 13 was prepared by a method similar to that of the battery of example 1, except that the A-block was replaced with polystyrene with azido groups at both ends. The specific parameters were shown in Table 1, and the preparation method was as follows:
1% of 4-(chloromethyl) benzoyl peroxide relative to the mass of the monomers was dissolved in 300 ml of anhydrous acetonitrile, and then the solution was introduced into a high-pressure reactor and purged with $N_2$ for 30 minutes. A certain molar amount of a styrene monomer was then weighed and transferred to the reactor at room temperature. The temperature inside the reactor was increased to 90°C, and the reaction mixture was stirred at a speed of 500 rpm for another 3 hours. The reactor was cooled with water to room temperature and depressurized to remove unreacted monomers. The solvent was removed under vacuum, and the resulting solid was washed several times with chloroform to remove the initiator residue. Finally, the polymer was dried under vacuum at 45°C to obtain a white product. 3 mmol of chlorine-terminated polystyrene and 60 mmol of sodium azide ($NaN_3$) were dissolved in 600 ml of N,N-dimethylformamide (DMF) and the mixture was stirred at 60°C overnight. The polymer solution was concentrated and precipitated three times in a mixed solvent (the volume ratio of methanol to water was 1 : 1). Then the pale yellow product was dried under vacuum at 45°C to obtain polystyrene comprising azides at both ends, i.e., an A-block polymer.

Example 14

The battery of example 14 was prepared by a method similar to that of the battery of example 1, except that the A-block was replaced with polyethylene oxide with azido groups at both ends. The specific parameters were shown in Table 1, and the preparation method was as follows:
An ethylene oxide monomer, water and potassium hydroxide (KOH) at a molar ratio of 1 : 0.1 : 0.02 were added into a stirred autoclave, a large amount of nitrogen was introduced to remove all the air, then the pressure was increased to 0.3 MPa, the stirring speed was gradually increased to 1000 r/min, and the temperature was raised to 80°C. After 6 hours of reaction, as the pressure inside the autoclave was reduced, the autoclave was pressurized shortly to remove excess monomers, followed by purification to obtain polyethylene oxide. 1% of 4-(chloromethyl) benzoyl peroxide relative to the mass of the monomers was dissolved in 300 ml of anhydrous acetonitrile, and then the solution was introduced into a high-pressure reactor and purged with nitrogen ($N_2$) for 30 minutes. Then the polyethylene oxide above was transferred to the reactor at room temperature. The temperature inside the reactor was increased to 90°C, and the reaction mixture was stirred at a speed of 500 rpm for another 3 hours. The reactor was cooled with water to room temperature and depressurized to remove unreacted monomers. The solvent was removed under vacuum, and the resulting solid was washed several times with chloroform to remove the initiator residue. Finally, the polymer was dried under vacuum at 45°C to obtain a white product. 3 mmol of chlorine-terminated polyethylene oxide and 60 mmol of sodium azide ($NaN_3$) were dissolved in 600 ml

of N,N-dimethylformamide (DMF) and the mixture was stirred at 60°C overnight. The polymer solution was concentrated and precipitated three times in a mixed solvent (the volume ratio of methanol to water was 1 : 1). Then the pale yellow product was dried under vacuum at 45°C to obtain polyethylene oxide comprising azides at both ends, i.e., an A-block polymer.

Example 15

The battery of example 15 was prepared by a method similar to that of the battery of example 1, except that the A-block was replaced with polyvinyl alcohol. The specific parameters were shown in Table 1, and the preparation method was as follows:
1% of 4-(chloromethyl) benzoyl peroxide relative to the mass of the monomers was dissolved in 300 ml of anhydrous acetonitrile, and then the solution was introduced into a high-pressure reactor and purged with $N_2$ for 30 minutes. A certain molar amount of an vinyl acetate monomer was then weighed and transferred to the reactor at room temperature. The temperature inside the reactor was increased to 90°C, and the reaction mixture was stirred at a speed of 500 rpm for another 3 hours. The reactor was cooled with water to room temperature and depressurized to remove unreacted monomers. The solvent was removed under vacuum, and the resulting solid was washed several times with chloroform to remove the initiator residue. Finally, the polymer was dried under vacuum at 45°C to obtain a white product. Then the chlorine-terminated polyvinyl acetate obtained after the reaction above was dissolved in a mixed solvent (the volume ratio of methanol to water was 79.5 : 0.5), wherein the mass fraction of polyvinyl acetate was 20%; and at a temperature of 30°C, a sodium hydroxide solution with a mass fraction of 1.5% was added for alcoholysis for 2 hours, and fully washed and filtered to obtain chlorine-terminated polyvinyl alcohol. 3 mmol of chlorine-terminated polyvinyl alcohol and 60 mmol of sodium azide (NaN3) were dissolved in 600 ml of N,N-dimethylformamide (DMF) and the mixture was stirred at 60°C overnight. The polymer solution was concentrated and precipitated three times in a mixed solvent (the volume ratio of methanol to water was 1 : 1). Then the pale yellow product was dried under vacuum at 45°C to obtain polyvinyl alcohol comprising azides at both ends, i.e., an A-block polymer.

Example 16

The battery of example 16 was prepared by a method similar to that of the battery of example 1, except that the A-block was replaced with poly(acrylonitrile-allyl acetate). The specific parameters were shown in Table 1 and the preparation method was as follows:
1% of 4-(chloromethyl) benzoyl peroxide relative to the mass of the monomers was dissolved in 300 ml of anhydrous acetonitrile, and then the solution was introduced into a high-pressure reactor and purged with $N_2$ for 30 minutes. Then, an acrylonitrile monomer and an allyl acetate monomer were weighed respectively at a molar ratio of 8 : 1 and transferred to the reactor at room temperature. The temperature inside the reactor was increased to 90°C, and the reaction mixture was stirred at a speed of 500 rpm for another 3 hours. The reactor was cooled with water to room temperature and depressurized to remove unreacted monomers. The solvent was removed under vacuum, and the resulting solid was washed several times with chloroform to remove the initiator residue. Finally, the polymer was dried under vacuum at 45°C to obtain a white product. 3 mmol of chlorine-terminated poly(acrylonitrile-allyl acetate) and 60 mmol of sodium azide ($NaN_3$) were dissolved in 600 ml of N,N-dimethylformamide (DMF) and the mixture was stirred at 60°C overnight. The polymer solution was concentrated and precipitated three times in a mixed solvent (the volume ratio of methanol to water was 1 : 1). Then the pale yellow product was dried under vacuum at 45°C to obtain poly(acrylonitrile-allyl acetate) comprising azides at both ends, i.e., an A-block polymer.

Example 17

The battery of example 17 was prepared by a method similar to that of the battery of example 1, except that the B-block was replaced with a polyvinyl fluoride block. The specific parameters were shown in Table 1, and the preparation method was as follows:
4 g of vinyl fluoride was weighed, 500 ml of tetrahydrofuran was taken, both were added to a four-neck flask, a large amount of nitrogen was introduced, the stirring speed was gradually increased to 1200 rpm, 1% of a RAFT chain transfer agent (CTA-alkyne) relative to the mass of the monomer and 0.1% of azodiisobutyronitrile relative to the mass of the monomer were added, and the flask was heated to 75°C. After 6 hours of reaction, the reaction was terminated by cooling in liquid nitrogen, and the solution was precipitated in a large amount of excess methanol. The polymer was collected by filtration and reprecipitated twice from chloroform with methanol. The resulting product was dried under vacuum at room temperature overnight to remove all traces of residual solvents to obtain polyvinyl fluoride with an alkynyl group at the tail end, i.e., a B-block polymer.

Example 18

The battery of example 18 was prepared by a method similar to that of the battery of example 1, except that the B-block was replaced with a polytetrafluoroethylene block. The specific parameters were shown in Table 1, and the preparation method was as follows:
4 g of tetrafluoroethylene was weighed, 500 ml of tetrahydrofuran was taken, both were added to a four-neck flask, a large amount of nitrogen was introduced, the stirring speed was gradually increased to 1200 rpm, 1% of a RAFT chain transfer agent (CTA-alkyne) relative to the mass of the monomer and 0.1% of azodiisobutyronitrile relative to the mass of the monomer were added, and the flask was heated to 75°C. After 6 hours of reaction, the reaction was terminated by cooling in liquid nitrogen, and the solution was precipitated in a large amount of excess methanol. The polymer was collected by filtration and reprecipitated twice from chloroform with methanol. The resulting product was dried under vacuum at room temperature overnight to remove all traces of residual solvents to obtain polytetrafluoroethylene with an alkynyl group at the tail end, i.e., a B-block polymer.

Comparative example 1

The battery of comparative example 1 was prepared by a method similar to that of the battery of example 1, except that the binder was polyvinylidene fluoride, which was purchased from Solvay Group under a branch number of 5130. The specific parameters were shown in Table 1.

Comparative example 2

The battery of comparative example 2 was prepared by a method similar to that of the battery of comparative example 1, except that the binder was poly(acrylonitrile-butyl methacrylate-styrene), which is prepared by the method as follows:
1% of 4-(chloromethyl) benzoyl peroxide relative to the mass of the monomers was dissolved in 300 ml of anhydrous acetonitrile, and then the solution was introduced into a high-pressure reactor and purged with $N_2$ for 30 minutes. Then, an acrylonitrile monomer, a butyl methacrylate monomer and a styrene monomer were weighed respectively at a molar ratio of 8 : 1 : 1 and added into 300 ml of anhydrous acetonitrile, the temperature inside the reactor was increased to 55°C, and the reaction mixture was stirred at a speed of 500 rpm for another 12 hours. The reactor was cooled with water to room temperature and depressurized to remove unreacted monomers. The solvent was removed under vacuum, and the resulting solid was washed several times with chloroform to remove the initiator residue. Finally, the polymer was dried under vacuum at 45°C to obtain a white product, i.e., poly(acrylonitrile-butyl methacrylate-styrene).

Comparative example 3

The battery of comparative example 3 was prepared by a method similar to that of the battery of comparative example 1, except that the binder was a blend of polyvinylidene fluoride and poly(acrylonitrile-butyl methacrylate-styrene). The specific parameters were shown in Table 1 and the preparation method was as follows:
Blending: The poly(acrylonitrile-butyl methacrylate-styrene) in comparative example 2 was blended with the polyvinylidene fluoride in comparative example 1 at a molar ratio of 6 : 4 to obtain a blend binder of polyvinylidene fluoride and polyvinyl alcohol.

Comparative example 4

The battery of comparative example 4 was prepared by a method similar to that of the battery of comparative example 3, except that the binder was a blend of polyvinylidene fluoride and polyacrylamide. The specific parameters were shown in Table 1.

Comparative example 5

The battery of comparative example 5 was prepared by a method similar to that of the battery of comparative example 3, except that the binder was a blend of polyvinylidene fluoride and poly(acrylic acid-acrylamide-ethyl methacrylate) The specific parameters were shown in Table 1.

Comparative example 6

The battery of comparative example 6 was prepared by a method similar to that of the battery of comparative

example 3, except that the binder was a blend of polyvinylidene fluoride and polyvinyl alcohol. The specific parameters were shown in Table 1.

**II. Performance tests**

1. Test of polymer properties

1) Measurement method of the weight-average molecular weight

A Waters 2695 Isocratic Hour PLC gel chromatograph (differential refractive index detector 2141) was used. A polystyrene solution sample with a mass fraction of 3.0% was used as a reference, and a matched chromatographic column (oily: Styragel Hour T5 DMF 7.8 * 300 mm + Styragel Hour T4) was selected. A purified N-methylpyrrolidone (NMP) solvent was used to prepare a 3.0% of polymer glue solution, and the prepared solution was allowed to stand for one day for later use. During the test, tetrahydrofuran is sucked with a syringe first for rinse, and this process is repeated several times. Then 5 ml of the test solution is sucked, the air in the syringe is removed, and the needle tip is wiped to dry. Finally, the sample solution is slowly injected into the injection port. The data were acquired after the readings were stable.

2. Performance tests of electrode plate

1) Test of film layer resistance

Small discs having a diameter of 3 mm were cut at the left, middle, and right parts of an electrode plate respectively. The indicator light of the IEST electrode plate resistance meter is turned on, and placed at an appropriate position of the "probe" of the film layer resistance meter, the "start" button is clicked, and the reading can be read once it is stable. Each small disc is tested at two positions, and finally the average value of six measurements is calculated, which is the film layer resistance of the electrode plate.

2) Test of binding force

The positive electrode plate was cut into a test sample with a size of 20 mm × 100 mm for later use; a double-sided adhesive tape is adhered onto the positive electrode film layer side of the electrode plate and compacted with a pressing roller, thus enabling the double-sided adhesive tape to be completely attached to the electrode plate; the other side of the double-sided adhesive tape is adhered to the surface of a stainless steel, and then one end of the sample is bent reversely with a bending angle of 180°; and a high-speed tension machine is used for testing, one end of the stainless steel is fixed to the clamp below the tension machine, and the bent end of the sample is fixed to the clamp above the tension machine; and the angle of the sample is adjusted to ensure that the upper and lower ends are in vertical positions, then the sample is stretched at a speed of 50 mm/min until the current collector is completely peeled off from a positive electrode film layer, and the displacement and force during the process are recorded. The binding force per unit length of the electrode plate is calculated by dividing the force at equilibrium by the width of the electrode plate attached to the double-sided adhesive tape (the width direction of the electrode plate is perpendicular to the peeling direction). In this test, the width of the electrode plate is 20 mm.

3) Test of flexibility

The positive electrode plate after cold pressing was cut into a test sample with a size of 20 × 100 mm. The test sample is folded forward in half and flattened with a pressing roller of 2 kg, and then it is unfolded to check against light whether there is light transmission in the gap; if there is no light transmission, the test sample is folded backward in half and flattened with a pressing roller of 2 kg, and then it is unfolded to check against light again; and this process is repeated until there is light transmission in the gap and the number of folding is recorded. The test is repeated three times and the average value is taken as reference data of the flexibility of the electrode plate.

3. Performance test of battery

1) DC impedance test of battery

The process of the DC impedance test of a battery was as follows: at 25°C, a battery was charged at a constant current of 1/3 C to 4.3 V, then charged at the constant voltage of 4.3 V until the current was 0.05 C and allowed to stand for 5 min, and the voltage was recorded as V1. Then the battery was discharged at 1/3 C for 30 s, and the voltage at this time was

recorded as V2. The direct current resistance DCR1 of the battery after the first cycle was calculated as (V2 - V1)/(1/3C). The above steps were repeated for the same battery above, and the internal resistance DCRn (n = 1, 2, 3..., and 100) of the battery after the nth cycle was recored at the same time. With the values of the 100 points of the above DCR1, DCR2, DCR3, ..., and DCR100 as the ordinate and the corresponding number of cycles as the abscissa, a curve of the battery discharge DCR versus the number of cycles was obtained.

During this test, the first cycle corresponded to n = 1, the second cycle corresponded to n = 2, ... and the 100th cycle corresponded to n = 100. The increase ratio of the internal resistance of the battery of example 1 in Table 2 = (DCRn - DCR1)/DCR1 * 100%, and the test processes in the comparative examples and other examples were the same as above. The data in Table 2 was the data measured after 100 cycles under the above test conditions.

2) Test of cycle capacity retention rate of battery

The capacity retention rate of a battery was tested as follows: at 25°C, a prepared battery was charged at a constant current of 1/3 C to 4.3 V, then charged at the constant voltage of 4.3 V until the current was 0.05 C, allowed to stand for 5 min, and then discharged at a rate of 1/3 C to 2.8 V, and the obtained capacity was recorded as the initial capacity C0. The above steps were repeated for the same battery above, the discharge capacity $C_n$ of the battery after the nth cycle was recorded at the same time, and then the capacity retention rate of the battery Pn = Cn/C0 × 100% after each cycle. With the values of the 500 points of P1, P2, ..., and 500 as the ordinate and the corresponding number of cycles as the abscissa, a curve of capacity retention rate of the battery versus number of cycles was obtained. During this test, the first cycle corresponded to n = 1, the second cycle corresponded to n = 2, ... and the 500th cycle corresponded to n = 500. The capacity retention rate data of batteries corresponding to examples or comparative examples in Table 2 were the data obtained after 500 cycles under the test conditions above, namely, the value of P500. The test process for the comparative example and other examples was the same as that described above.

3) Test of metal deposition amount

At normal temperature, the prepared lithium ion battery was charged and discharged at a current of 0.5 C (i.e., the current value when the theoretical capacity was completely released within 2 hours) for the first time, wherein the battery was charged at a constant current and a constant voltage, the end-of-charge voltage was 4.2 V, the cut-off current was 0.05 C, and the end-of-discharge voltage was 2.8 V; the battery was then allowed to stand for 24 hours and then charged at a constant current of 0.5 C and a constant voltage to 4.2 V, and then the fully charged battery was discharged at a current of 1 C, and the end-of-discharge voltage was 2.8 V; and the cell was disassembled, the negative electrode plate thereof was taken out, and the deposition amount of Co and Mn metals was determined by means of an inductively coupled plasma (ICP) method.

4) Test of capacity retention rate at 45°C

The battery was charged at a constant current of 1 C to 4.2 V, then charged at the constant voltage of 4.2 V until the current was 0.05 C, allowed to stand for 10 min, and then discharged at a constant current of 1 C to a cut-off voltage of 2.8 V, and the capacity before storage was recorded as CAPi; and the battery was charged at a constant current of 1 C until a cut-off voltage of 4.2 V, and then charged at the constant voltage of 4.2 V until the current was 0.05 C; after the lithium ion battery was placed in an oven at 45°C for 120 days, it was taken out and discharged at a constant current of 1 C to 2.8 V, and the capacity after storage was recorded as $CAP_2$; and the storage capacity retention rate of the lithium ion secondary battery was calculated according to the formula below:

$$\text{Storage capacity retention rate (\%) of lithium ion secondary battery} = CAP_2/CAP_1 \times 100\%.$$

.

**III. Testing results and analysis of examples and comparative examples**

The batteries of the examples and comparative examples were respectively prepared according to the method described above and various performance parameters thereof were measured. The results were shown in Tables 1 and 2 below.

Table 1 Preparation parameters and test results of weight-average molecular weight of examples and comparative examples

| No. | Binder | A-block | | | Each of B-blocks | | | Binder | |
|---|---|---|---|---|---|---|---|---|---|
| | | Name | Mass fracti on | Weight averag e molecu lar weight | Name | Mass fracti on | Weigh t-averag e molec ular weight | Weigh t-averag e molec ular weight | Mass fracti on/% |
| Examp le 1 | Polyvinylidene fluoride-poly(acrylonitrile-butyl methacrylate-styrene)-polyvinylidene fluoride block copolymer | Poly(acrylon itrile-butyl methacrylate -styrene) | 40% | 480,00 0 | Polyvi nylide ne fluorid e | 30.0 % | 400,00 0 | 1,200, 000 | 1.0 |
| Examp le 2 | Polyvinylidene fluoridepoly(acrylonitrile-butyl methacrylate-styrene)-polyvinylidene fluoride block copolymer | Poly(acrylon itrile-butyl methacrylate -styrene) | 45% | 540,00 0 | Polyvi nylide ne fluorid e | 27.5 % | 330,00 0 | 1,200, 000 | 1.0 |
| Examp le 3 | Polyvinylidene fluoride-poly(acrylonitrile-butyl methacrylate-styrene)-polyvinylidene fluoride block copolymer | Poly(acrylon itrile-butyl methacrylate -styrene) | 50% | 600,00 0 | Polyvi nylide ne fluorid e | 25.0 % | 300,00 0 | 1,200, 000 | 1.0 |
| Examp le 4 | Polyvinylidene fluoride-poly(acrylonitrile-butyl methacrylate-styrene)-polyvinylidene fluoride block copolymer | Poly(acrylon itrile-butyl methacrylate -styrene) | 55% | 660,00 0 | Polyvi nylide ne fluorid e | 22.5 % | 270,00 0 | 1,200, 000 | 1.0 |
| Examp le 5 | Polyvinylidene fluoride-poly(acrylonitrile-butyl methacrylate-styrene)-polyvinylidene fluoride block copolymer | Poly(acrylon itrile-butyl methacrylate -styrene) | 60% | 720,00 0 | Polyvi nylide ne fluorid e | 20.0 % | 240,00 0 | 1,200, 000 | 1.0 |
| Examp le 6 | Polyvinylidene fluoride-poly(acrylonitrile-butyl methacrylate-styrene)-polyvinylidene fluoride block copolymer | Poly(acrylon itrile-butyl methacrylate -styrene) | 55% | 220,00 0 | Polyvi nylide ne fluorid e | 22.5 % | 90,000 | 400,00 0 | 1.0 |
| Examp le 7 | Polyvinylidene fluoride-poly(acrylonitrile-butyl methacrylate-styrene)-polyvinylidene fluoride block copolymer | Poly(acrylon itrile-butyl methacrylate -styrene) | 55% | 400,00 0 | Polyvi nylide ne fluorid e | 22.5 % | 150,00 0 | 700,00 0 | 1.0 |
| Examp le 8 | Polyvinylidene fluoride-poly(acrylonitrile-butyl methacrylate-styrene)-polyvinylidene fluoride block copolymer | Poly(acrylon itrile-butyl methacrylate -styrene) | 55% | 800,00 0 | Polyvi nylide ne fluorid e | 22.5 % | 350,00 0 | 1,500, 000 | 1.0 |
| Examp le 9 | Polyvinylidene fluoride-poly(acrylonitrile-butyl methacrylate-styrene)-polyvinylidene fluoride block copolymer | Poly(acrylon itrile-butyl methacrylate -styrene) | 55% | 1,100,0 00 | Polyvi nylide ne fluorid e | 22.5 % | 450,00 0 | 2,000, 000 | 1.0 |

(continued)

| No. | Binder | A-block | | | Each of B-blocks | | | Binder | |
|---|---|---|---|---|---|---|---|---|---|
| | | Name | Mass fracti on | Weight averag e molecu lar weight | Name | Mass fracti on | Weigh t-averag e molec ular weight | Weigh t-averag e molec ular weight | Mass fracti on/% |
| Examp le 10 | Polyvinylidene fluoride-polyacrylamide-polyvinylidene fluoride block copolymer | Polyacrylam ide | 55% | 660,00 0 | Polyvi nylide ne fluorid e | 22.5 % | 270,00 0 | 1,200, 000 | 1.0 |
| Examp le 11 | Polyvinylidene fluoride-poly(acrylic acid-acrylamide-ethyl methacrylate)-polyvinylidene fluoride block copolymer | Poly(acrylic acid-acrylamide-ethyl methacrylate ) | 55% | 660,00 0 | Polyvi nylide ne fluorid e | 22.5 % | 270,00 0 | 1,200, 000 | 1.0 |
| Examp le 12 | Polyvinylidene fluoride-poly(acrylonitrile-acrylamide-acrylate)-polyvinylidene fluoride block copolymer | Poly(acrylon itrile-acrylamide-acrylate) | 55% | 660,00 0 | Polyvi nylide ne fluorid e | 22.5 % | 270,00 0 | 1,200, 000 | 1.0 |
| Examp le 13 | Polyvinylidene fluoride-polystyrene-polyvinylidene fluoride block copolymer | Polystyrene | 55% | 660,00 0 | Polyvi nylide ne fluorid e | 22.5 % | 270,00 0 | 1,200, 000 | 1.0 |
| Examp le 14 | Polyvinylidene fluoride-polyethylene oxide-polyvinylidene fluoride block copolymer | Polyethylene oxide | 55% | 660,00 0 | Polyvi nylide ne fluoride | 22.5 % | 270,00 0 | 1,200, 000 | 1.0 |
| Examp le 15 | Polyvinylidene fluoride-polyvinyl alcohol-polyvinylidene fluoride block copolymer | Polyvinyl alcohol | 55% | 660,00 0 | Polyvi nylide ne fluorid e | 22.5 % | 270,00 0 | 1,200, 000 | 1.0 |
| Examp le 16 | Polyvinylidene fluoride-poly(acrylonitrile-allyl acetate)-polyvinylidene fluoride block copolymer | Poly(acrylon itrile-allyl acetate) | 55% | 660,00 0 | Polyvi nylide ne fluorid e | 22.5 % | 270,00 0 | 1,200, 000 | 1.0 |
| Examp le 17 | Polyvinyl fluoride-poly(acrylonitrile-butyl methacrylate-styrene)-polyvinyl fluoride block copolymer | Poly(acrylon itrile-butyl methacrylate -styrene) | 55% | 660,00 0 | Polyvi nyl fluorid e | 22.5 % | 270,00 0 | 1,200, 000 | 1.0 |
| Examp le 18 | Polytetrafluoroethyle ne-poly(acrylonitrile-bu-tyl methacrylate-styrene)-polytetrafluor-oethyle ne block copolymer | Poly(acrylon itrile-butyl methacrylate -styrene) | 55% | 660,00 0 | Polytet rafluor oethyl ene | 22.5 % | 270,00 0 | 1,200, 000 | 1.0 |

(continued)

| No. | Binder | A-block | | | Each of B-blocks | | | Binder | |
|---|---|---|---|---|---|---|---|---|---|
| | | Name | Mass fraction | Weight average molecular weight | Name | Mass fraction | Weight-average molecular weight | Weight-average molecular weight | Mass fraction/% |
| Comparative example 1 | Polyvinylidene fluoride | / | / | / | / | / | / | 1,200, 000 | 1.0 |
| Comparative example 2 | Poly(acrylonitrile-butyl methacrylate-styrene) | / | / | / | / | / | / | 1,200, 000 | 1.0 |
| Comparative example 3 | Blend of polyvinylidene fluoride and poly(acrylonitrile-butyl methacrylate-styrene) | / | / | / | / | / | / | 1,200, 000 | 1.0 |
| Comparative example 4 | Blend of polyvinylidene fluoride and polyacrylamide | / | / | / | / | / | / | 1,200, 000 | 1.0 |
| Comparative example 5 | Blend of polyvinylidene fluoride and poly(acrylic acid-acrylamide-ethyl methacrylate) | / | / | / | / | / | / | 1,200, 000 | 1.0 |
| Comparative example 6 | Blend of polyvinylidene fluoride and polyvinyl alcohol | / | / | / | / | / | / | 1,200, 000 | 1.0 |

Table 2 Performance test results of examples and comparative examples

| No. | Binder | Performance of | | | Performance of battery | | | |
|---|---|---|---|---|---|---|---|---|
| | | Film layer resist ance/ Ω | Bindin g force/( N/m) | Flexibili ty/numb er of bending | Direct current impedanc e growth rate | Cycle capacity retention rate | Depositio n amount of Co and Mn metals/pp m | Capacit y retentio n rate at 45°C |
| Exa mple 1 | Polyvinylidene fluoride-poly(acrylonitrile-butyl methacrylate-styrene)-polyvinylidene fluoride block copolymer | 0.41 | 12.53 | 3.3 | 14.95% | 89.04% | 539 | 90.32% |
| Exa mple 2 | Polyvinylidene fluoride-poly(acrylonitrile-butyl methacrylate-styrene)-polyvinylidene fluoride block copolymer | 0.39 | 12.94 | 3.3 | 15.34% | 89.42% | 501 | 90.58% |
| Exa mple 3 | Polyvinylidene fluoride-poly(acrylonitrile-butyl methacrylate-styrene)-polyvinylidene fluoride block copolymer | 0.4 | 13.47 | 3.3 | 16.49% | 90.12% | 472 | 91.01% |
| Exa mple 4 | Polyvinylidene fluoride-poly(acrylonitrile-butyl methacrylate-styrene)-polyvinylidene fluoride block copolymer | 0.42 | 13.98 | 3.3 | 17.45% | 90.54% | 408 | 91.42% |
| Exa mple 5 | Polyvinylidene fluoride-poly(acrylonitrile-butyl methacrylate-styrene)-polyvinylidene fluoride block copolymer | 0.43 | 13.75 | 3.3 | 16.98% | 91.02% | 369 | 90.58% |
| Exa mple 6 | Polyvinylidene fluoride-poly(acrylonitrile-butyl methacrylate-styrene)-polyvinylidene fluoride block copolymer | 0.98 | 11.49 | 2.7 | 20.34% | 88.32% | 569 | 88.21 % |
| Exa mple 7 | Polyvinylidene fluoride-poly(acrylonitrile-butyl methacrylate-styrene)-polyvinylidene fluoride block copolymer | 0.56 | 12.09 | 3 | 18.92% | 89.57% | 502 | 89.47% |

(continued)

| No. | Binder | Performance of | | | Performance of battery | | | |
|---|---|---|---|---|---|---|---|---|
| | | Film layer resistance/ Ω | Bindin g force/( N/m) | Flexibility/number of bending | Direct current impedance growth rate | Cycle capacity retention rate | Deposition amount of Co and Mn metals/ppm | Capacity retention rate at 45°C |
| Example 8 | Polyvinylidene fluoride-poly(acrylonitrile-butyl methacrylate-styrene)-polyvinylidene fluoride block copolymer | 0.43 | 14.23 | 3.3 | 17.28% | 90.73% | 379 | 90.93% |
| Example 9 | Polyvinylidene fluoride-poly(acrylonitrile-butyl methacrylate-styrene)-polyvinylidene fluoride block copolymer | 0.52 | 16.43 | 3.7 | 19.27% | 89.79% | 341 | 90.17% |
| Example 10 | Polyvinylidene fluoride-polyacrylamide-polyvinylidene fluoride block copolymer | 0.4 | 12.34 | 3 | 18.23% | 89.51% | 403 | 90.29% |
| Example 11 | Polyvinylidene fluoride-poly(acrylic acid-acrylamide-ethyl methacrylate)-polyvinylidene fluoride block copolymer | 0.36 | 12.08 | 3 | 18.02% | 90.15% | 414 | 90.02% |
| Example 12 | Polyvinylidene fluoride-poly(acrylonitrile-acrylamide-acrylate)-polyvinylidene fluoride block copolymer | 0.39 | 13.52 | 3 | 18.92% | 90.34% | 378 | 90.57% |
| Example 13 | Polyvinylidene fluoride-polystyrene-polyvinylidene fluoride block copolymer | 0.36 | 12.03 | 3 | 18.35% | 89.23% | 593 | 89.63% |
| Example 14 | Polyvinylidene fluoride-polyethylene oxide-polyvinylidene fluoride block copolymer | 0.39 | 12.19 | 3 | 17.29% | 89.19% | 602 | 89.34% |
| Example 15 | Polyvinylidene fluoride-polyvinyl alcohol-polyvinylidene fluoride block copolymer | 0.37 | 11.23 | 3 | 18.34% | 89.04% | 589 | 89.04% |

(continued)

| No. | Binder | Performance of | | | Performance of battery | | | |
|---|---|---|---|---|---|---|---|---|
| | | Film layer resistance/ Ω | Binding force/( N/m) | Flexibility/number of bending | Direct current impedance growth rate | Cycle capacity retention rate | Deposition amount of Co and Mn metals/ppm | Capacity retention rate at 45°C |
| Example 16 | Polyvinylidene fluoride-poly(acrylonitrile-allyl acetate)-polyvinylidene fluoride block copolymer | 0.4 | 11.68 | 3 | 18.98% | 89.25% | 476 | 89.48% |
| Example 17 | Polyvinyl fluoride-poly(acrylonitrile-butyl methacrylate-styrene)-polyvinyl fluoride block copolymer | 0.42 | 12.29 | 3 | 20.34% | 88.46% | 480 | 89.43% |
| Example 18 | Polytetrafluoroethylene-poly(acrylonitrile-butyl methacrylate-styrene)-polytetrafluoroethylene block copolymer | 0.41 | 12.09 | 3 | 21.10% | 89.05% | 493 | 89.38% |
| Comparative example 1 | Polyvinylidene fluoride | 0.51 | 10.50 | 3.0 | 21.35% | 88.79% | 632 | 89.76% |
| Comparative example 2 | Poly(acrylonitrile-butyl methacrylate-styrene) | 0.4 | 9.58 | 3 | 21.78% | 89.30% | 203 | 90.02% |
| Comparative example 3 | Blend of polyvinylidene fluoride and poly(acrylonitrile-butyl methacrylate-styrene) | 0.42 | 7.34 | 2.7 | 23.34% | 87.29% | 457 | 88.38% |
| Comparative example 4 | Blend of polyvinylidene fluoride and polyacrylamide | 0.45 | 8.57 | 2.7 | 23.19% | 88.41% | 538 | 89.04% |
| Comparative example 5 | Blend of polyvinylidene fluoride and poly(acrylic acid-acrylamide-ethyl methacrylate) | 0.43 | 7.93 | 2.7 | 22.58% | 88.29% | 549 | 89.23% |

(continued)

| No. | Binder | Performance of | | | Performance of battery | | | |
|---|---|---|---|---|---|---|---|---|
| | | Film layer resist ance/ Ω | Bindin g force/( N/m) | Flexibili ty/numb er of bending | Direct current impedanc e growth rate | Cycle capacity retention rate | Depositio n amount of Co and Mn metals/pp m | Capacit y retentio n rate at 45°C |
| Com parati ve exam ple 6 | Blend of polyvinylidene fluoride and polyvinyl alcohol | 0.44 | 8.59 | 2.7 | 24.84% | 87.36% | 607 | 88.18% |

From the results above, it can be seen that the binders in examples 1-18 are BAB-type block copolymers comprising an A-block and a B-block, wherein the B-block contains at least one structural unit derived from vinylidene fluoride, vinyl fluoride or tetrafluoroethylene, and the A-block contains at least one structural unit derived from acrylonitrile, butyl methacrylate, styrene, acrylamide, acrylic acid, ethyl methacrylate, an acrylate, ethylene oxide, vinyl alcohol or allyl acetate. From the comparison between examples 1-18 and comparative example 1, it can be seen that compared with a vinylidene fluoride polymer alone as a binder, a polyvinylidene fluoride-poly(acrylonitrile-butyl methacrylate-styrene)-polyvinylidene fluoride block copolymer, a polyvinylidene fluoride-polyacrylamide-polyvinylidene fluoride block copolymer, a polyvinylidene fluoride-poly(acrylic acid-acrylamide-ethyl methacrylate-polyvinylidene fluoride block copolymer, a polyvinylidene fluoride-poly(acrylonitrile-acrylamide-acrylate)-polyvinylidene fluoride block copolymer, a polyvinylidene fluoride-polystyrene-polyvinylidene fluoride block copolymer, a polyvinylidene fluoride-polyethylene oxide-polyvinylidene fluoride block copolymer, a polyvinylidene fluoride-polyvinyl alcohol-polyvinylidene fluoride block copolymer, a polyvinylidene fluoride-poly(acrylonitrile-allyl acetate)-polyvinylidene fluoride block copolymer, a polyvinyl fluoride-poly(acrylonitrile-butyl methacrylate-styrene)-polyvinyl fluoride block copolymer, and a polytetrafluoroethylene-poly(acrylonitrile-butyl methacrylate-styrene)-polytetrafluoroethylene BAB-type block copolymer as binders can effectively increase the binding force of the electrode plate and reduce the direct current impedance growth rate and metal deposition amount of the battery, such that the electrode plate has both a low film layer resistance and excellent flexibility and the battery has both a high cycle capacity retention rate and a high capacity retention rate at 45°C.

The binders in examples 1-18 are BAB-type block copolymers comprising an A-block and a B-block, wherein the B-block contains a fluoropolymer, and the A-block comprises a fluorine-free polymer; and the binders in comparative examples 3-6 are blends of the fluoropolymer and the fluorine-free polymer. From the comparison between examples 1-18 and comparative examples 3-6, it can be seen that compared with a blend of the fluoropolymer and the fluorine-free polymer as a binder, the BAB-type block copolymers above can effectively improve the adhesion and flexibility of the electrode plate, reduce the direct current impedance growth rate and metal deposition amount of the battery, and also ensure that the electrode plate has a low film layer resistance and the battery has both a high cycle capacity retention rate and a high capacity retention rate at 45°C.

The binders in examples 10-12 are BAB-type block copolymers comprising an A-block and a B-block, wherein the B-block contains a structural unit derived from vinylidene fluoride, and the A-block at least comprises a structural unit derived from acrylamide. From the comparison between examples 10-12 and comparative example 1, it can be seen that compared with a polyvinylidene fluoride polymer alone as a binder, the BAB-type block copolymers above can effectively improve the binding force and flexibility of the electrode plate, reduce the film layer resistance of the electrode plate, improve the cycle capacity retention rate and the capacity retention rate at 45°C of the battery, and reduce the direct current impedance growth rate and metal deposition amount of the battery.

The binders in examples 1-5, 12 and 16 are BAB-type block copolymers comprising an A-block and a B-block, wherein the B-block contains a structural unit derived from vinylidene fluoride, and the A-block at least comprises a structural unit derived from acrylonitrile and a structural unit derived from butyl methacrylate, an acrylate, or allyl acetate. From the comparison between examples 1-5, 12 and 16 and comparative example 1, it can be seen that compared with a polyvinylidene fluoride polymer alone as a binder, the BAB-type block copolymers above as binders can effectively improve the binding force and flexibility of the electrode plate, reduce the film layer resistance of the electrode plate, reduce the direct current impedance growth rate and metal deposition amount of the battery, and also ensure that the battery has both a high cycle capacity retention rate and a high capacity retention rate at 45°C.

The binder in example 4 is a BAB-type block copolymer comprising an A-block and a B-block, wherein the B-block contains a structural unit derived from vinylidene fluoride, and the A-block comprises a structural unit derived from

acrylonitrile, a structural unit derived from butyl methacrylate, and a structural unit derived from styrene. From the comparison between example 4 and examples 10-16, it can be seen that a polyvinylidene fluoride-poly(acrylonitrile-butyl methacrylate-styrene)-polyvinylidene fluoride BAB-type block copolymer as a binder can further significantly improve the binding force and flexibility of the electrode plate, such that the cycle capacity retention rate and the capacity retention rate at 45°C of the battery are further improved.

The binder in example 12 is a BAB-type block copolymer comprising an A-block and a B-block, wherein the B-block contains a structural unit derived from vinylidene fluoride, and the A-block comprises a structural unit derived from acrylonitrile, a structural unit derived from acrylamide, and a structural unit derived from an acrylate. From the comparison of example 12 over examples 4, 10-11 and 13-16, it can be seen that a polyvinylidene fluoride-poly(acrylonitrile-acrylamide-acrylate)-polyvinylidene fluoride block copolymer, i.e., BAB-type block copolymer, as a binder can significantly reduce the metal deposition amount of the battery.

From the comparison between examples 1-5 and comparative example 1, it can be seen that compared with a polyvinylidene fluoride polymer alone as a binder, a BAB-type block copolymer with the mass content of A-block being 40% - 60% as a binder can improve the binding force and flexibility of the electrode plate, reduce the film layer resistance of the electrode plate, improve the cycle capacity retention rate of the battery, and reduce the direct current impedance growth rate and metal deposition amount of the battery. From the comparison between examples 1-5 and comparative example 3, it can be seen that compared with a blend of a fluoropolymer and a fluorine-free polymer as a binder, a BAB-type block copolymer with the mass content of A-block being 40% - 60% as a binder can improve the binding force and flexibility of the electrode plate, reduce the direct current impedance growth rate of the battery, and also ensure that the electrode plate has a low film layer resistance and the battery has both a low metal deposition amount, and a high cycle capacity retention rate and a high capacity retention rate at 45°C.

From the comparison between examples 1 and 6-9 and comparative example 1, it can be seen that compared with a traditional PVDF binder, a BAB-type block copolymer with a weight-average molecular weight of 400,000 - 2,000,000 as a binder can improve the binding force of an electrode plate, reduce the direct current impedance growth rate of the battery, and also ensure that the electrode plate has both a low film layer resistance and an excellent flexibility and the battery has both a low metal deposition amount and a high cycle capacity retention rate. From the comparison between examples 1 and 6-9 and comparative example 3, it can be seen that compared with a blend of a fluoropolymer and a fluorine-free polymer as a binder, a BAB-type block copolymer with a weight-average molecular weight of 400,000 - 2,000,000 as a binder can improve the binding force and flexibility of the electrode plate, reduce the direct current impedance growth rate of the battery, and also ensure that the electrode plate has a low film layer resistance and the battery has both a low metal deposition amount and a high cycle capacity retention rate and a high capacity retention rate at 45°C.

From the comparison between examples 1-5 and comparative example 1, it can be seen that compared with a polyvinylidene fluoride polymer alone as a binder, a BAB-type block copolymer with the weight-average molecular weight of the A-block of the fluorine-containing block being 200,000 - 1,100,000 and the weight-average molecular weight of the B-block being 100,000 - 500,000 as a binder can improve the binding force and flexibility of the electrode plate, reduce the film layer resistance of the electrode plate, improve the cycle capacity retention rate and the capacity retention rate at 45°C of the battery, and reduce the direct current impedance growth rate and metal deposition amount of the battery.

From the comparison between examples 1-5 and comparative example 3, it can be seen that compared with a blend of a fluoropolymer and a fluorine-free polymer as a binder, a BAB-type block copolymer with the weight-average molecular weight of the A-block of the fluorine-containing block being 200,000 - 1,100,000 and the weight-average molecular weight of the B-block being 100,000 - 500,000 as a binder can improve the binding force and flexibility of the electrode plate, reduce the direct current impedance growth rate of the battery, and also ensure that the electrode plate also has a low film layer resistance and the battery has both a low metal deposition amount, and a high cycle capacity retention rate and a high capacity retention rate at 45°C.

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. In addition, without departing from the gist of the present application, various modifications that are made to the embodiments and are conceivable to those skilled in the art, and other modes constructed by combining some of the constituent elements of the embodiments also fall within the scope of the present application.

## Claims

1. A BAB-type block copolymer, wherein the B-block contains a structural unit represented by formula I, and the A-block contains one or more of a structural unit represented by formula II and a structural unit represented by formula III,

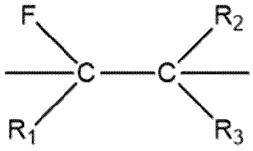

Formula I

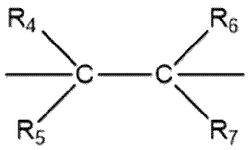

Formula II

$$-CH_2-CH_2-O-$$

Formula III

wherein $R_1$, $R_2$ and $R_3$ are each independently selected from one or more of hydrogen, fluorine, and $C_{1-3}$ alkyl containing at least one fluorine atom, $R_4$, $R_5$ and $R_6$ are each independently selected from hydrogen and substituted or unsubstituted $C_{1-5}$ alkyl, and $R_7$ is selected from carboxyl, an ester group, hydroxyl, amido, cyano, and a substituted or unsubstituted aromatic group.

**2.** The BAB-type block copolymer according to claim 1, wherein the A-block contains a structural unit represented by formula II with $R_7$ being amido.

**3.** The BAB-type block copolymer according to claim 1, wherein the A-block contains a structural unit represented by formula II with $R_7$ being cyano and a structural unit represented by formula II with $R_7$ being an ester group.

**4.** The BAB-type block copolymer according to claim 1, wherein the A-block contains a structural unit represented by formula II with $R_7$ being cyano, a structural unit represented by formula II with $R_7$ being an ester group, and a structural unit represented by formula II with $R_7$ being a substituted or unsubstituted aromatic group.

**5.** The BAB-type block copolymer according to claim 1, wherein the A-block contains a structural unit represented by formula II with $R_7$ being cyano, a structural unit represented by formula II with $R_7$ being amido, and a structural unit represented by formula II with $R_7$ being an ester group.

**6.** The BAB-type block copolymer according to claim 1, wherein the mass content of the A-block is 40% - 60%, based on the total mass of the block copolymer.

**7.** The BAB-type block copolymer according to any one of claims 1 to 6, wherein the block copolymer has a weight-average molecular weight of 400,000 - 2,000,000.

**8.** The BAB-type block copolymer according to any one of claims 1 to 6, wherein the A-block in the block copolymer has a weight-average molecular weight of 200,000 - 1,100,000.

**9.** The BAB-type block copolymer according to any one of claims 1 to 6, wherein each of the B blocks in the block copolymer has a weight-average molecular weight of 100,000 - 500,000.

**10.** The BAB-type block copolymer according to any one of claims 1 to 6, wherein the structural unit represented by formula I is derived from a group consisting of vinylidene fluoride, tetrafluoroethylene, vinyl fluoride, hexafluoropropene, and combinations thereof.

**11.** The BAB-type block copolymer according to claim 1, wherein the structural unit represented by formula II is derived from a group consisting of acrylonitrile, butenenitrile, styrene, vinyl alcohol, acrylamide, ethyl acrylate, ethyl methacrylate, butyl methacrylate, methacrylic acid, ethylacrylic acid, methacrylamide, N-methacrylamide, N-methylmethacrylamide, N-isopropylacrylamide, N-isopropylmethacrylamide, N-tert-butylacrylamide, N-tert-butyl(meth)acrylamide, N,N-dimethylacrylamide, N,N-dimethylmethacrylamide, N,N-diethylacrylamide, N,N-diethylmethacrylamide, acrylic acid, vinylbenzoic acid, allyl acetate, an acrylate, and combinations thereof.

**12.** A method for preparing a BAB-type block copolymer, comprising the following steps:

preparation of B-block: polymerizing at least one monomer represented by formula V to prepare the B-block,

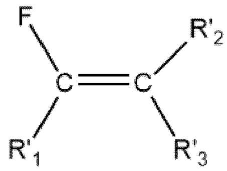
Formula V

wherein R'$_1$, R'$_2$ and R'$_3$ are each independently selected from one or more of hydrogen, fluorine, and $C_{1-3}$ alkyl containing at least one fluorine atom;
preparation of A-block: polymerizing at least one monomer represented by formula VI to prepare the A-block, or subjecting a monomer represented by formula VII to ring-opening polymerization to prepare the A-block,

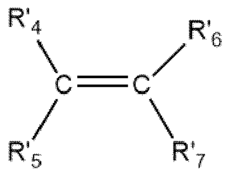
Formula VI

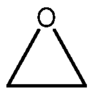
Formula VII

wherein R'$_4$, R'$_5$ and R'$_6$ are each independently selected from hydrogen and substituted or unsubstituted $C_{1-5}$ alkyl, and R'$_7$ is selected from one of carboxyl, an ester group, hydroxyl, amido, cyano, and a substituted or unsubstituted aromatic group; and
preparation of BAB-type block copolymer: connecting the B-blocks with the A-block to prepare the BAB-type block copolymer.

**13.** The preparation method according to claim 12, wherein the method for preparing the B-block comprises: reacting at least one monomer represented by formula V, a chain transfer agent and a first initiator at a reaction temperature of 60-75°C for 4-6 hours by means of reversible addition-fragmentation chain transfer polymerization to obtain the B-block with an azido or alkynyl group at the tail end.

**14.** The preparation method according to claim 12 or 13, wherein the method for preparing the A-block comprises: subjecting at least one monomer represented by formula VI and a second initiator to a polymerization reaction at a reaction temperature of 80-95°C for 2.5-5 hours to obtain the A-block with alkynyl or azido groups at both ends.

**15.** The preparation method according to claim 12 or 13, wherein the method for preparing the A-block comprises:

subjecting a monomer represented by formula VII, an ionic initiator and water to a polymerization reaction at a reaction temperature of 60-80°C for 6-8 hours to obtain a product with hydroxyl at both ends; and
subjecting the hydroxyl of the product to a functionalization reaction to obtain the A-block with alkynyl or azido groups at both ends.

**16.** The preparation method according to any one of claims 12 to 15, wherein the preparation of the BAB-type block copolymer comprises:
mixing the A-block with azido or alkynyl groups at both ends and the B-blocks with an alkynyl or azido group at the tail end, and subjecting same to a click reaction to prepare the BAB-type block copolymer, wherein the end groups of the A-block and the B-blocks are different.

**17.** The preparation method according to claim 12 or 13, wherein the chain transfer agent is an RAFT chain transfer agent containing a terminal alkynyl or azido group.

18. The preparation method according to claim 12 or 13, wherein the second initiator is a symmetrical bifunctional initiator.

19. The preparation method according to claim 12 or 13, wherein the first initiator is selected from one or two of azobisisobutyronitrile and azobisisoheptonitrile.

20. Use of a BAB-type block copolymer according to any one of claims 1 to 11 in a secondary battery.

21. A positive electrode plate, comprising a positive electrode current collector and a positive electrode film layer provided on at least one surface of the positive electrode current collector, wherein the positive electrode film layer comprises a positive electrode active material, a conductive agent and a binder, and the binder is a BAB-type block copolymer according to any one of claims 1 to 11 or a BAB-type block copolymer prepared by a preparation method according to any one of claims 12 to 19.

22. The positive electrode plate according to claim 21, wherein the binding force per unit length between the positive electrode film layer and the positive electrode current collector is not less than 11 N/m.

23. The positive electrode plate according to claim 21, wherein the phenomenon of light transmission through the positive electrode plate will not occur until the positive electrode plate is subjected to bending tests not less than 3 times.

24. The positive electrode plate according to claim 21, wherein the film layer resistance of the positive electrode plate is less than or equal to 1.0 Ω.

25. A secondary battery, comprising an electrode assembly and an electrolyte solution, wherein the electrode assembly comprises a separator, a negative electrode plate and a positive electrode plate according to any one of claims 21 to 24.

26. The secondary battery according to claim 25, comprising at least one of a lithium ion battery, a sodium ion battery, a magnesium ion battery, or a potassium ion battery.

27. A battery module, comprising a secondary battery according to claim 25 or 26.

28. A battery pack, comprising a secondary battery according to claim 25 or 26 and a battery module according to claim 27.

29. A power consuming device, comprising at least one selected from a secondary battery according to claim 25 or 26, a battery module according to claim 27, or a battery pack according to claim 28.

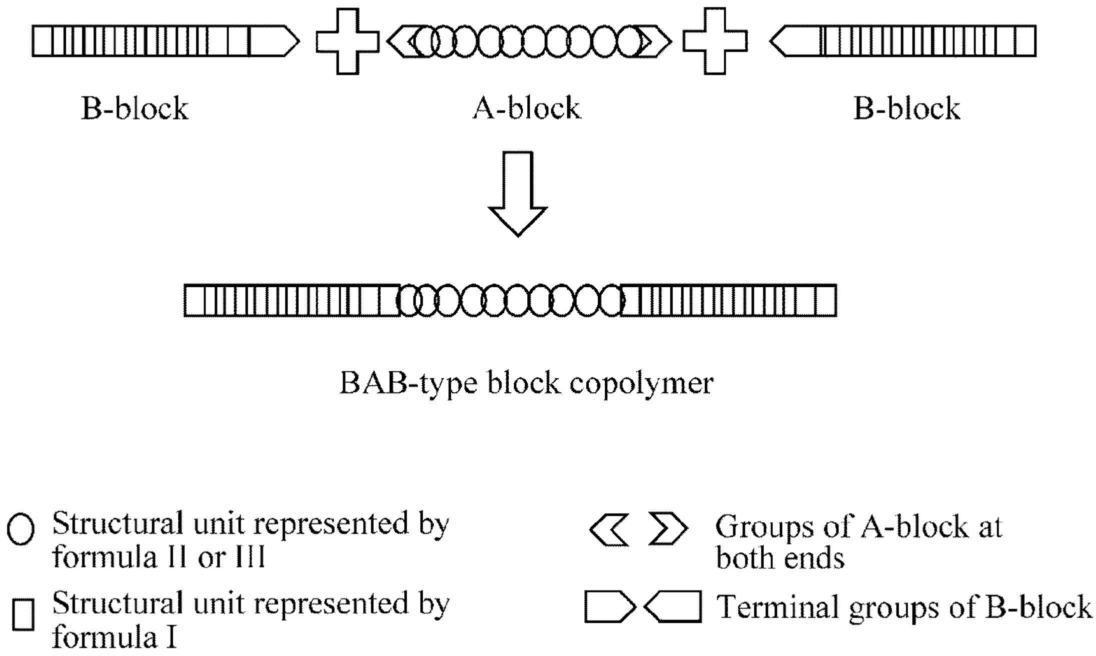

B-block
A-block
B-block
BAB-type block copolymer
Structural unit represented by formula II or III
Structural unit represented by formula I
Groups of A-block at both ends
Terminal groups of B-block


*FIG. 1*

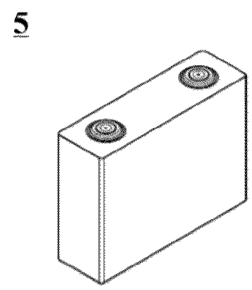

5


*FIG. 2*

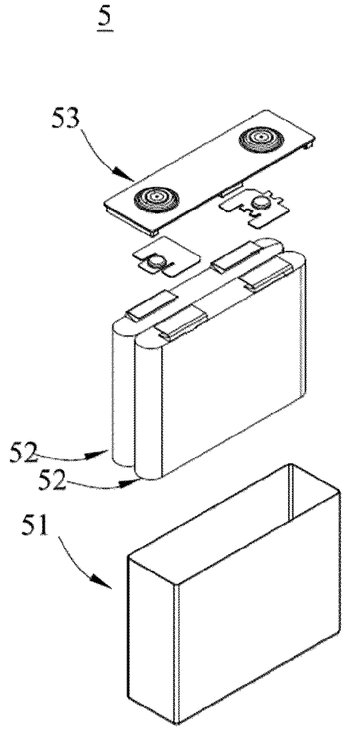


FIG. 3

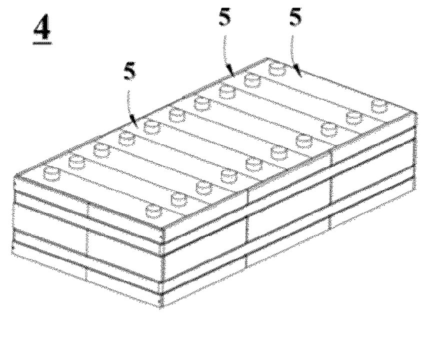


FIG. 4

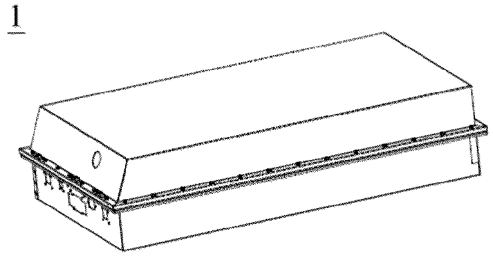


FIG. 5

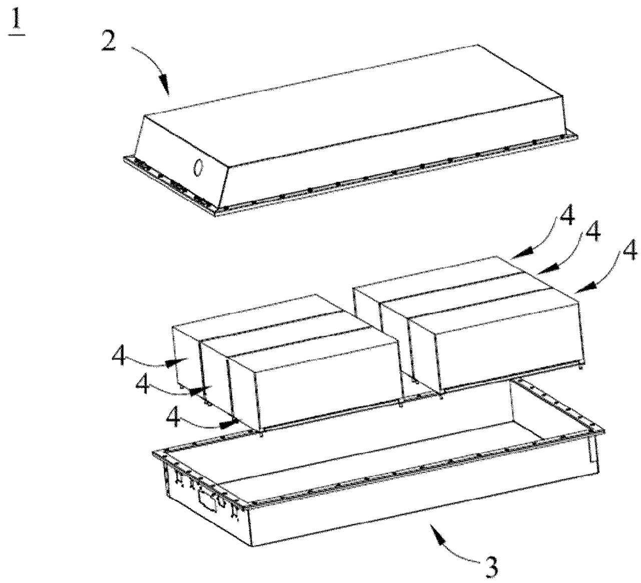


FIG. 6

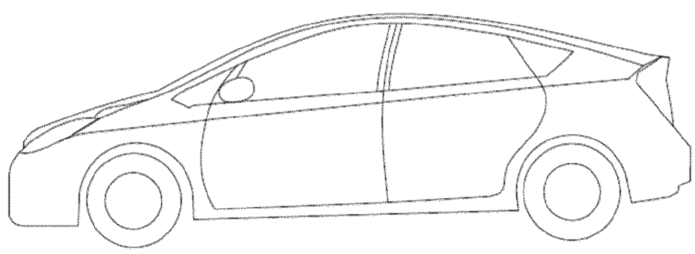

FIG. 7

**INTERNATIONAL SEARCH REPORT**

International application No. **PCT/CN2022/128035**

**A. CLASSIFICATION OF SUBJECT MATTER**

C08G81/02(2006.01)i； H01M4/62(2006.01)i

According to International Patent Classification (IPC) or to both national classification and IPC

**B. FIELDS SEARCHED**

Minimum documentation searched (classification system followed by classification symbols)

IPC： C08G； H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 三嵌段, 共聚, 偏二氟乙烯, 氟乙烯, 四氟乙烯, 环氧乙烷, 氧化乙烯, 乙烯醇, 聚苯乙烯, triblock, PVDF, vinylenedifluoride, PVF, vinylfluorid, PTFE, tetrafluoroethylene, PEO, polyethyleneoxide, PVA, polyvinyl, alcohol, vinylalcohol, polystyrene

**C. DOCUMENTS CONSIDERED TO BE RELEVANT**

| Category* | Citation of document, with indication, where appropriate, of the relevant passages | Relevant to claim No. |
|---|---|---|
| X | CN 105449273 A (SAMSUNG ELECTRONICS CO., LTD.) 30 March 2016 (2016-03-30) description, paragraphs 139-280 | 1-29 |
| Y | CN 105449273 A (SAMSUNG ELECTRONICS CO., LTD.) 30 March 2016 (2016-03-30) description, paragraphs 139-280 | 1-29 |
| Y | CN 106099257 A (SAMSUNG ELECTRONICS CO., LTD.) 09 November 2016 (2016-11-09) description, paragraph [0088] | 1-29 |
| A | US 2015057419 A1 (UNIVERSITY OF CONNECTICUT) 26 February 2015 (2015-02-26) entire document | 1-29 |
| A | CN 108417836 A (MINNAN NORMAL UNIVERSITY) 17 August 2018 (2018-08-17) entire document | 1-29 |

☐ Further documents are listed in the continuation of Box C.

☑ See patent family annex.

* Special categories of cited documents:

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **16 June 2023** | **23 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2022/128035**

| Patent document cited in search report | | | Publication date (day/month/year) | Patent family member(s) | | | Publication date (day/month/year) |
|---|---|---|---|---|---|---|---|
| CN | 105449273 | A | 30 March 2016 | US | 2016087306 | A1 | 24 March 2016 |
| | | | | US | 10468718 | B2 | 05 November 2019 |
| | | | | EP | 3001494 | A1 | 30 March 2016 |
| | | | | EP | 3001494 | B1 | 15 August 2018 |
| | | | | KR | 20160034173 | A | 29 March 2016 |
| | | | | JP | 2016062895 | A | 25 April 2016 |
| | | | | KR | 20170029486 | A | 15 March 2017 |
| | | | | KR | 20170029487 | A | 15 March 2017 |
| | | | | KR | 101747865 | B1 | 16 June 2017 |
| | | | | EP | 3407413 | A1 | 28 November 2018 |
| | | | | JP | 6628399 | B2 | 08 January 2020 |
| | | | | CN | 105449273 | B | 07 July 2020 |
| | | | | KR | 102247500 | B1 | 03 May 2021 |
| | | | | EP | 3407413 | B1 | 27 April 2022 |
| CN | 106099257 | A | 09 November 2016 | EP | 3089258 | A1 | 02 November 2016 |
| | | | | EP | 3089258 | B1 | 21 March 2018 |
| | | | | KR | 20160128164 | A | 07 November 2016 |
| | | | | KR | 102364843 | B1 | 18 February 2022 |
| | | | | US | 2016322685 | A1 | 03 November 2016 |
| | | | | US | 10566670 | B2 | 18 February 2020 |
| | | | | CN | 106099257 | B | 05 January 2021 |
| US | 2015057419 | A1 | 26 February 2015 | | None | | |
| CN | 108417836 | A | 17 August 2018 | CN | 108417836 | B | 04 May 2021 |

Form PCT/ISA/210 (patent family annex) (July 2022)